(19) 

Europäisches
Patentamt

European
Patent Office

Office européen
des brevets

(11) **EP 4 648 510 A1**

(12) **EUROPEAN PATENT APPLICATION**
published in accordance with Art. 153(4) EPC

(43) Date of publication:
**12.11.2025 Bulletin 2025/46**

(21) Application number: **23917221.6**

(22) Date of filing: **29.11.2023**

(51) International Patent Classification (IPC):
*H04W 72/0446* (2023.01)

(52) Cooperative Patent Classification (CPC):
**H04L 1/1861; H04L 1/1607; H04L 1/1812;
H04W 72/0446; H04W 72/232; H04W 88/04**

(86) International application number:
**PCT/CN2023/134949**

(87) International publication number:
**WO 2024/152753 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.01.2023 CN 202310204435
10.03.2023 CN 202310277101**

(71) Applicant: **Huawei Technologies Co., Ltd.
Shenzhen, Guangdong 518129 (CN)**

(72) Inventors:
• **ZHANG, Yanqing
Shenzhen, Guangdong 518129 (CN)**
• **LI, Xueru
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD, NETWORK DEVICE AND TERMINAL DEVICE**

(57) This application provides a communication method, including: A first terminal device receives first information from a second terminal device through a first link, where the first information includes first HARQ-ACK information corresponding to first downlink data; and sends the first HARQ-ACK information to a network device through a second link, where the first downlink data is downlink data sent by the network device to the second terminal device. The first link is a transmission link between the first terminal device and the second terminal device, and the second link is a link between the first terminal device and the network device. The first terminal device receives the HARQ-ACK information that is of the downlink data and that is sent by the second terminal device, and forwards the HARQ-ACK information to the network device. In this way, the second terminal device can be prevented from directly feeding back the HARQ-ACK information of the downlink data to the network device, thereby reducing uplink communication overheads of the second terminal device.

FIG. 8

## Description

This application claims priorities to Chinese Patent Application No. 202310204435.7, filed with the China National Intellectual Property Administration on January 20, 2023 and entitled "XR TRANSMISSION METHOD, TERMINAL DEVICE, NETWORK DEVICE, AND COMMUNICATION SYSTEM", and to Chinese Patent Application No. 202310277101.2, filed with the China National Intellectual Property Administration on March 10, 2023 and entitled "COMMUNICATION METHOD, NETWORK DEVICE, AND TERMINAL DEVICE", both of which are incorporated herein by reference in their entireties.

## TECHNICAL FIELD

Embodiments of this application relate to the communication field, and specifically, to a communication method, a network device, and a terminal device.

## BACKGROUND

In a scenario in which an extended reality (eXtended Reality, XR) device is connected to a network device, the XR device needs to communicate with a server through the network device, that is, the XR device sends uplink data (for example, sends pose (pose) information of the XR device, audio data, and video data captured by a camera of the XR device) to the server through the network device. After receiving the data, the server generates corresponding downlink data (for example, a video to be displayed on the XR device), and sends the downlink data to the XR device through the network device.

The network device is usually far away from the XR device. To ensure uplink transmission communication quality, the XR device needs to perform power amplification on a data signal before sending the uplink data. Consequently, power consumption overheads of uplink transmission are high. In addition, a battery capacity of the XR device is small. If the XR device directly sends the uplink data to the network device, a battery life of the XR device is affected. Currently, a method for reducing uplink communication power consumption of the XR device is as follows: The XR device sends the uplink data to the network device through a terminal device.

However, after the terminal device receives hybrid automatic repeat request acknowledgement (hybrid automatic repeat request Acknowledgement, HARQ-ACK) information that needs to be fed back by the XR device to the network device, how to forward the HARQ-ACK information to the network device becomes an urgent problem to be resolved.

## SUMMARY

To resolve the foregoing technical problem, this application provides a communication method. In the method, a first terminal device receives HARQ-ACK information that is of downlink data and that is sent by a second terminal device, and forwards the HARQ-ACK information to a network device, to reduce uplink communication overheads of the second terminal device.

According to a first aspect, a communication method is provided. The method may be performed by a first terminal device, or may be performed by a component (for example, a chip or a circuit) of the first terminal device. This is not limited in this application. For ease of description, the following uses an example in which the first terminal device performs the method for description.

The communication method includes: The first terminal device receives first information from a second terminal device through a first link, where the first information includes first hybrid automatic repeat request acknowledgement HARQ-ACK information, the first HARQ-ACK information is HARQ-ACK information corresponding to first downlink data, and the first downlink data is downlink data sent by a network device to the second terminal device; and the first terminal device sends second information to the network device through a second link, where the second information includes the first HARQ-ACK information, where the first link is a transmission link between the first terminal device and the second terminal device, and the second link is a link between the first terminal device and the network device.

Based on the foregoing technical solutions, the second terminal device receives the first downlink data, and sends, to the first terminal device through the first link, the first information including the first HARQ-ACK information. The first HARQ-ACK information indicates a decoding result of the first downlink data. After receiving the first HARQ-ACK information, the first terminal device forwards the first HARQ-ACK information to the network device. In the technical solutions, the second terminal device no longer directly feeds back the HARQ-ACK information of the downlink data to the network device, but first feeds back the HARQ-ACK information of the downlink data to the first terminal device through the first link, and the first terminal device forwards the HARQ-ACK information of the downlink data to the network device. This prevents the second terminal device from directly feeding back the HARQ-ACK information of the downlink data to the network device, thereby reducing uplink communication power consumption overheads of the second terminal device.

With reference to the first aspect, in some implementations of the first aspect, before the first terminal device sends the second information to the network device through the second link, the method further includes: The first terminal device determines a first time unit in which the first terminal device sends the second information.

Based on the foregoing technical solutions, before sending the second information to the network device, the first terminal device needs to determine the first time unit for sending the second information, to avoid that the network device fails in reception when the first terminal device feeds back the second information in an inappropriate time unit.

With reference to the first aspect, in some implementations of the first aspect, that the first terminal device determines the first time unit the first terminal device sends the second information includes: The first terminal device determines a first time gap, where the first time gap is less than or equal to a time gap between the first time unit and a second time unit; and the first terminal device determines the first time unit based on the first time gap and the second time unit, where the second time unit is a time unit in which the first terminal device receives the first information through the first link, or a time unit in which the first terminal device receives first control information through the second link, or a time unit in which the second terminal device receives the first downlink data.

Based on the foregoing technical solutions, the first terminal device may determine, by using the first time gap, the first time unit for sending the second information, where the first time gap is less than or equal to a time gap between the first time unit and the second time unit, and the second time unit is a time unit known to the first terminal device (for example, the time unit in which the first terminal device receives the first information through the first link, or the time unit in which the first terminal device receives the first control information through the second link), or the time unit in which the second terminal device receives the first downlink data. Therefore, the first terminal device can quickly and accurately determine the first time unit based on the first time gap when the second time unit is known.

With reference to the first aspect, in some implementations of the first aspect, that the first terminal device determines the first time gap includes: The first terminal device receives the first control information from the network device, where the first control information indicates the first time gap; or the first terminal device receives first indication information from the second terminal device, where the first indication information indicates the first time gap.

Based on the foregoing technical solutions, the network device may indicate the first time gap to the first terminal device in a dynamic indication manner (for example, delivering the first control information), or the second terminal device may indicate the first time gap to the first terminal device in a dynamic indication manner (for example, sending the first indication information), so that the first terminal device can learn of the first time gap in different manners, thereby improving flexibility of the solutions.

With reference to the first aspect, in some implementations of the first aspect, before the first terminal device receives the first control information from the network device, the method further includes: The first terminal device receives first configuration information from the network device, where the first configuration information is used to configure a time gap set, and the first time gap is one time gap in the time gap set.

Based on the foregoing technical solutions, before indicating the first time gap, the network device may configure, for the first terminal device by using the second configuration information, the time gap set including a plurality of time gaps. When a specific time gap needs to be indicated, the time gap may be indicated by indicating a time gap index. When the network device needs to indicate different time gaps, different time gap indices may be indicated for implementation, so that signaling overheads can be reduced.

With reference to the first aspect, in some implementations of the first aspect, when the first time gap is measured in slots, that the first terminal device determines the first time gap further includes: The first terminal device determines that a subcarrier spacing SCS referenced by the first time gap is a first SCS or a second SCS, where the first SCS is an SCS corresponding to the first link, the second SCS is an SCS corresponding to the second link, and the first link is different from the second link.

Based on the foregoing technical solutions, when the first time gap is measured in slots, to prevent the first terminal device from misunderstanding specific gap duration of the first time gap, the first terminal device may determine the SCS referenced by the first time gap.

With reference to the first aspect, in some implementations of the first aspect, that the first terminal device determines that the SCS referenced by the first time gap is the first SCS or the second SCS includes: The first terminal device determines, based on a first parameter, that the SCS referenced by the first time gap is the first SCS or the second SCS, where the first parameter indicates the first SCS or the second SCS, where the first parameter is configured by the network device, the first parameter is determined by the first terminal device and the network device through negotiation, or the first parameter is pre-burned into the first terminal device.

Based on the foregoing technical solutions, the first terminal device may determine, based on the first parameter, the SCS referenced by the first time gap, and the first parameter may be obtained in different manners, so that flexibility of the solutions can be improved.

With reference to the first aspect, in some implementations of the first aspect, the method further includes: The first terminal device determines a first physical uplink control channel PUCCH resource, where the first PUCCH resource is used to transmit the second information.

Based on the foregoing technical solutions, the first terminal device may determine the first PUCCH resource for transmitting the second information, so as to send the second information to the network device through the second link. This prevents the second terminal device from directly feeding back HARQ-ACK information of downlink data to the network device, thereby reducing uplink communication overheads of the second terminal device.

With reference to the first aspect, in some implementations of the first aspect, that the first terminal device determines the first PUCCH resource includes: The first terminal device receives the first control information from the network device, and determines the first PUCCH resource based on third information included in the first control information; or the first terminal device receives second indication information from the second terminal device, and determines the first PUCCH resource based on the second indication information.

Based on the foregoing technical solutions, the network device may indicate the first PUCCH resource to the first terminal device in a dynamic indication manner (for example, delivering the first control information), or the second terminal device may indicate the first PUCCH resource to the first terminal device in a dynamic indication manner (for example, sending the second indication information), so that the first terminal device can learn of the first PUCCH resource in different manners, thereby improving flexibility of the solutions.

With reference to the first aspect, in some implementations of the first aspect, the first control information is further sent to the second terminal device to schedule the first downlink data.

Based on the foregoing technical solutions, the network device may send the first control information to the first terminal device and the second terminal device in a multicast manner, so that signaling overheads for sending the control information by the network device can be reduced.

With reference to the first aspect, in some implementations of the first aspect, the method further includes: The first terminal device determines a size of a HARQ codebook carrying the first HARQ-ACK information.

With reference to the first aspect, in some implementations of the first aspect, that the first terminal device determines the size of the HARQ codebook carrying the first HARQ-ACK information includes: The first terminal device receives fourth information from the network device, where the fourth information indicates the size of the HARQ codebook; or the first terminal device determines the size of the HARQ codebook based on a first quantity, where the first quantity is a maximum quantity of HARQ-ACK information that is of downlink data and that is transmissible through the second link in the first time unit.

With reference to the first aspect, in some implementations of the first aspect, when the first terminal device receives the first information from the second terminal device through a physical sidelink feedback channel PSFCH on the first link, the method further includes: The first terminal device determines a second quantity M of downlink data in a first downlink data set, where the first downlink data is one of the M pieces of downlink data, M pieces of HARQ-ACK information corresponding to the M pieces of downlink data are all transmitted on the PSFCH, and M is a positive integer; the first terminal device determines a second resource block quantity based on the second quantity and a first resource block quantity, where the first resource block quantity is a quantity of resource blocks included in the PSFCH, and the second resource block quantity is a quantity of resource blocks occupied by the first HARQ-ACK information; and the first terminal device determines a position of the second resource block quantity in the first resource block quantity based on a position of the first downlink data in the downlink data set.

Based on the foregoing technical solutions, to correctly receive and parse HARQ-ACK information, the first terminal device needs to determine a quantity and positions of resource blocks occupied to carry the HARQ-ACK information.

With reference to the first aspect, in some implementations of the first aspect, the PSFCH is used to transmit HARQ-ACK information of downlink data.

Based on the foregoing technical solutions, the first transmission resource may be a resource dedicated to transmitting HARQ-ACK information of downlink data, that is, a transmission resource may be separately configured for transmitting the HARQ-ACK information of the downlink data, to avoid confusion with a resource of another function.

When the first transmission resource is a resource dedicated to transmitting the HARQ-ACK information of the downlink data, M, the first resource block quantity, and the second resource block quantity satisfy the following relationship:

$$N = \left\lfloor \frac{K}{M} \right\rfloor$$

where N represents the second resource block quantity, K represents the first resource block quantity, $\lfloor \ \rfloor$ represents a floor operation, and N resource blocks corresponding to an $m^{th}$ piece of downlink data in the M pieces of downlink data are resource blocks whose indices are (m-1)*N to m*N-1 in K resource blocks;
or

M, the first resource block quantity, and the second resource block quantity satisfy the following relationship:

$$N = \frac{K}{M}$$

where M is divisible by K, and N resource blocks corresponding to an $m^{th}$ piece of downlink data in the M pieces of downlink data are resource blocks whose indices are (m-1)*N to m*N-1 in K resource blocks;
or
if M1>0, when m is any integer from 1 to M1, N resource blocks corresponding to an $m^{th}$ piece of downlink data in the M pieces of downlink data are resource blocks whose indices are (m-1)*K1 to m*K1-1 in K resource blocks, or when m is any integer from M1 to M, N resource blocks corresponding to an $m^{th}$ piece of downlink data in the M pieces of downlink data are an [MI *K1+(m-M1-1)*K2]$^{th}$ resource block to an [M1 *K1+(m-M1-1)*K2+K2-1]$^{th}$ resource block in K resource blocks; or
if M1=0, N resource blocks corresponding to an $m^{th}$ piece of downlink data in the M pieces of downlink data are an [M1 *K1+(m-M1-1)*K2]$^{th}$ resource block to an [M1*K1+(m-M1-1)*K2+K2-1]$^{th}$ resource block in K resource blocks, where

K1 is $\left\lceil \dfrac{K}{M} \right\rceil$ , K2 is $\left\lfloor \dfrac{K}{M} \right\rfloor$ , M1 is a remainder of $\dfrac{K}{M}$, and $\lceil \rceil$ represents a ceiling operation.

With reference to the first aspect, in some implementations of the first aspect, the PSFCH is used to transmit HARQ-ACK information of downlink data and HARQ-ACK information of sidelink data.

Based on the foregoing technical solution, the first transmission resource may be used to transmit the HARQ-ACK information of the downlink data and the HARQ-ACK information of the sidelink data. In other words, a configured transmission resource may be shared for the HARQ-ACK information of the downlink data and the HARQ-ACK information of the sidelink data.

When the PSFCH is used to transmit the HARQ-ACK information of the downlink data and the HARQ-ACK information of the sidelink data, M, the first resource block quantity, the second resource block quantity, and a third quantity satisfy the following relationship:

$$N = \left\lfloor \frac{K}{M+A} \right\rfloor$$

where N represents the second resource block quantity, K represents the first resource block quantity, A represents the third quantity, the third quantity is a quantity of HARQ-ACK information that is of the sidelink data and that is transmitted on the PSFCH, L J represents a floor operation, and N resource blocks corresponding to an $m^{th}$ piece of downlink data in the M pieces of downlink data and A pieces of sidelink data are resource blocks whose indices are (m-1)*N to m*N-1 in K resource blocks;
or
M, the first resource block quantity, the second resource block quantity, and a third quantity satisfy the following relationship:

$$N = \frac{K}{M+A}$$

where M+A is divisible by K, and N resource blocks corresponding to an $m^{th}$ piece of downlink data in the M pieces of downlink data and A pieces of sidelink data are resource blocks whose indices are (m-1)*N to m*N-1 in K resource blocks;
or
if M1>0, when m is any integer from 1 to M1, N resource blocks corresponding to an $m^{th}$ piece of downlink data in the M pieces of downlink data and A pieces of sidelink data are resource blocks whose indices are (m-1)*K1 to m*K1-1 in K resource blocks, or when m is any integer from M1 to M, N resource blocks corresponding to an $m^{th}$ piece of downlink data in the M pieces of downlink data are an [M1 *K1+(m-M1-1)*K2]$^{th}$ resource block to an [M1 *K1+(m-M1-1)*K2+K2-1]$^{th}$ resource block in K resource blocks; or
if M1=0, N resource blocks corresponding to an $m^{th}$ piece of downlink data in the M pieces of downlink data and A pieces of sidelink data are an $[M1*K1+(m-M1-1)*K2]^{th}$ resource block to an $[M1*K1+(m-M1-1)*K2+K2-1]^{th}$ resource block in K resource blocks, where

K1 is $\left\lceil \dfrac{K}{M+A} \right\rceil$, K2 is $\left\lfloor \dfrac{K}{M+A} \right\rfloor$, M1 is a remainder of $\dfrac{K}{M+A}$, and $\lceil \rceil$ represents a ceiling operation.

With reference to the first aspect, in some implementations of the first aspect, the first downlink data includes a physical downlink shared channel PDSCH, the first link is a link for communication based on a first communication interface, the second link is a link for communication based on a second communication interface, the first communication interface is a PC5 interface, the second communication interface is a first Uu interface, the first terminal device includes a mobile terminal, and the second terminal device includes an extended reality XR device.

According to a second aspect, a communication method is provided. The method may be performed by a network device, or may be performed by a component (for example, a chip or a circuit) of the network device. This is not limited in this application. For ease of description, the following uses an example in which the network device performs the method for description.

The communication method includes: The network device sends first downlink data to a second terminal device through a third link; the network device configures a first transmission resource for a first terminal device through a second link, where the first transmission resource is used to transmit second information, the second information includes first hybrid automatic repeat request acknowledgement HARQ-ACK information, and the first HARQ-ACK information is HARQ-ACK information corresponding to the first downlink data; and the network device receives the second information from the first terminal device through the second link, where the second link is a link between the first terminal device and the network device, and the third link is a transmission link between the second terminal device and the network device.

With reference to the second aspect, in some implementations of the second aspect, the first transmission resource includes a first time domain resource and a first physical uplink control channel PUCCH resource, the first time domain resource is in a first time unit, and the method further includes: The network device sends first control information to the first terminal device, where the first control information indicates a first time gap, where the first time gap is less than or equal to a time gap between the first time unit and a second time unit, and the second time unit is a time unit in which the first terminal device receives first information through a first link, or a time unit in which the first terminal device receives the first control information through the second link, or a time unit in which the second terminal device receives the first downlink data.

With reference to the second aspect, in some implementations of the second aspect, before the network device sends the first control information to the first terminal device, the method further includes: The network device sends first configuration information to the first terminal device, where the first configuration information is used to configure a time gap set, and the first time gap is one time gap in the time gap set.

With reference to the second aspect, in some implementations of the second aspect, when the first time gap is measured in slots, the method further includes: The network device sends a first parameter to the first terminal device, where the first parameter indicates that a subcarrier spacing SCS referenced by the first time gap is a first SCS or a second SCS, the first SCS is an SCS corresponding to the first link, the second SCS is an SCS corresponding to the second link, and the first link is different from the second link.

With reference to the second aspect, in some implementations of the second aspect, the method further includes: The network device sends the first control information to the first terminal device, where the first control information includes third information, and the third information indicates the first PUCCH resource.

With reference to the second aspect, in some implementations of the second aspect, that the network device sends the first control information to the first terminal device includes: The network device sends the first control information to the first terminal device and the second terminal device, where the first control information is further used to schedule the first downlink data.

With reference to the second aspect, in some implementations of the second aspect, the method further includes: The network device determines, based on a first quantity, a size of a HARQ codebook carrying the first HARQ-ACK information; and the network device sends fourth information to the first terminal device, where the fourth information indicates the size of the HARQ codebook, where the first quantity is a maximum quantity of HARQ-ACK information that is of downlink data and that is transmissible through the second link in the first time unit.

For technical effects of the method shown in the second aspect and the possible designs of the second aspect, refer to the technical effects in the first aspect and the possible designs of the first aspect.

According to a third aspect, a communication method is provided. The method may be performed by a second terminal device, or may be performed by a component (for example, a chip or a circuit) of the second terminal device. This is not limited in this application. For ease of description, the following uses an example in which the second terminal device performs the method for description.

**EP 4 648 510 A1**

The communication method includes: The second terminal device receives first downlink data from a network device through a third link; and the second terminal device sends first information and fifth information to a first terminal device through a first link, where the fifth information indicates a first transmission resource, the first information includes first hybrid automatic repeat request acknowledgement HARQ-ACK information, and the first HARQ-ACK information is HARQ-ACK information corresponding to the first downlink data, where the first transmission resource is used by the first terminal device to send second information to the network device through a second link, the second information includes the first HARQ-ACK information, the first link is a transmission link between the first terminal device and the second terminal device, the second link is a link between the first terminal device and the network device, and the third link is a transmission link between the second terminal device and the network device.

With reference to the third aspect, in some implementations of the third aspect, the first transmission resource includes a first time domain resource and a first physical uplink control channel PUCCH resource, the first time domain resource is in a first time unit, the fifth information includes first indication information, and the first indication information indicates a first time gap; and the first time gap is less than or equal to a time gap between the first time unit and a second time unit, and the second time unit is a time unit in which the first terminal device receives the first information through the first link, or a time unit in which the first terminal device receives first control information through the second link, or a time unit in which the second terminal device receives the first downlink data.

With reference to the third aspect, in some implementations of the third aspect, the fifth information includes second indication information, and the second indication information indicates the first PUCCH resource.

With reference to the third aspect, in some implementations of the third aspect, the first information and the fifth information are included in a media access control control element MAC CE.

For technical effects of the method shown in the third aspect and the possible designs of the third aspect, refer to the technical effects in the first aspect and the possible designs of the first aspect.

According to a fourth aspect, a terminal device is provided. The terminal device is configured to perform any one of the first aspect and the implementations of the first aspect. Specifically, the terminal device includes a processor and a memory. The memory is configured to store a computer program. The processor is configured to invoke the computer program from the memory and run the computer program, so that the terminal device performs any one of the first aspect and the implementations of the first aspect.

According to a fifth aspect, a network device is provided. The network device is configured to perform any one of the second aspect and the implementations of the second aspect. Specifically, the network device includes a processor and a memory. The memory is configured to store a computer program. The processor is configured to invoke the computer program from the memory and run the computer program, so that the network device performs any one of the second aspect and the implementations of the second aspect.

According to a sixth aspect, a terminal device is provided. The terminal device is configured to perform any one of the third aspect and the implementations of the third aspect. Specifically, the terminal device includes a processor and a memory. The memory is configured to store a computer program. The processor is configured to invoke the computer program from the memory and run the computer program, so that the terminal device performs any one of the third aspect and the implementations of the third aspect.

According to a seventh aspect, a communication apparatus is provided. The communication apparatus is configured to perform the method provided in any one of the first aspect to the third aspect and the implementations of the first aspect to the third aspect. Specifically, the communication apparatus may include units and/or modules (for example, a processing unit and a transceiver unit) configured to perform the method provided in any one of the first aspect to the third aspect and the implementations of the first aspect to the third aspect.

In an implementation, the communication apparatus is a terminal device. When the communication apparatus is the terminal device, the transceiver unit may be a transceiver or an input/output interface. The processing unit may be at least one processor. Optionally, the transceiver may be a transceiver circuit. Optionally, the input/output interface may be an input/output circuit.

In another implementation, the communication apparatus may be a chip, a chip system, or a circuit in the terminal device. In this case, the transceiver unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to an eighth aspect, this application provides a processor, configured to perform the method provided in the first aspect to the third aspect.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a ninth aspect, a computer-readable storage medium is provided. The computer-readable storage medium stores a computer program. When the computer program runs on a communication apparatus, the commu-

7

nication apparatus is enabled to perform the method according to any one of the implementations of the first aspect to the third aspect.

According to a tenth aspect, a computer program product including instructions is provided. When the computer program product runs on a computer, the computer is enabled to perform the method according to any one of the implementations of the first aspect to the third aspect.

According to an eleventh aspect, a chip is provided. The chip includes a processor and a communication interface. The processor reads instructions through the communication interface, to perform the method according to any one of the implementations of the first aspect to the third aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method according to any one of the implementations of the first aspect to the third aspect.

According to a twelfth aspect, a communication system is provided, including the terminal device in the fourth aspect, the network device in the fifth aspect, and the terminal device in the sixth aspect.

## BRIEF DESCRIPTION OF DRAWINGS

FIG. 1 is a diagram of a communication architecture according to an embodiment of this application;

FIG. 2 is a diagram of a scenario in which XR glasses communicate with a network device through a mobile phone according to an embodiment of this application;

FIG. 3 is a diagram of a structure of a slot according to an embodiment of this application;

FIG. 4 is a diagram of a time relationship between a PSSCH and a PSFCH according to an embodiment of this application;

FIG. 5 is a diagram of a frequency domain relationship between HARQ-ACK information of a PSSCH and a PSFCH according to an embodiment of this application;

FIG. 6 is a diagram of code division multiplexing (code division multiplexing, CDM) according to an embodiment of this application;

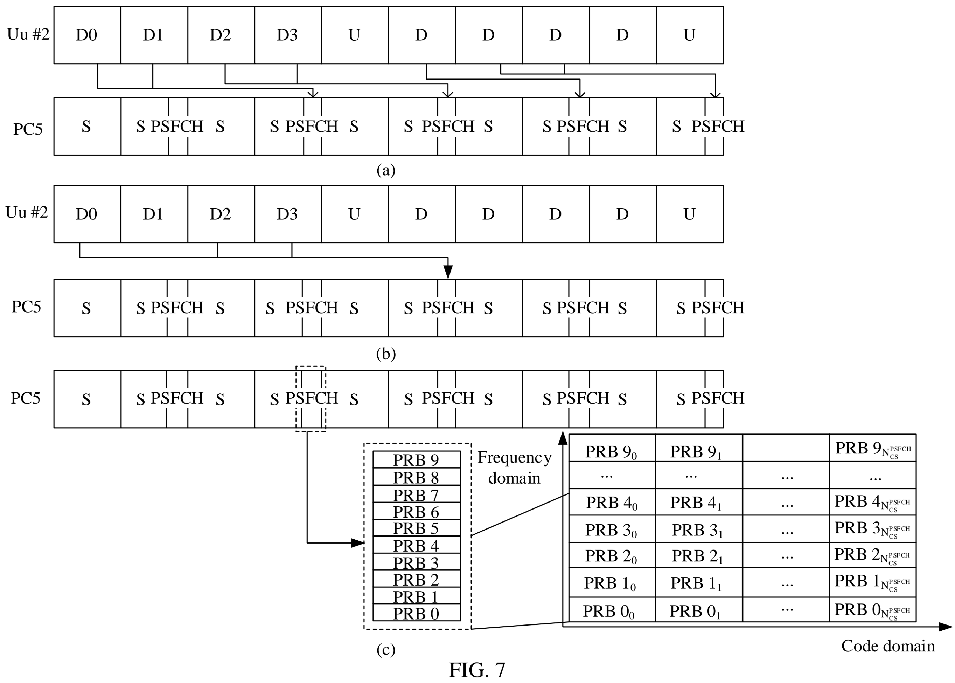

(a) to (c) in FIG. 7 are a diagram of relay transmission of HARQ-ACK information of a PDSCH according to an embodiment of this application;

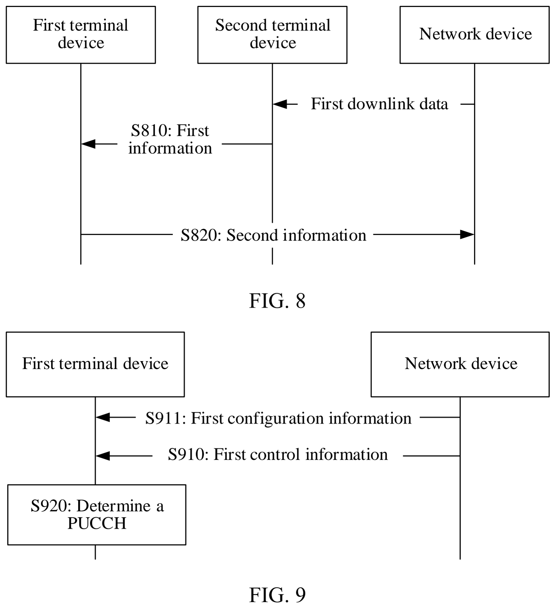

FIG. 8 is a schematic flowchart of a communication method according to an embodiment of this application;

FIG. 9 is a schematic flowchart of another communication method according to this application;

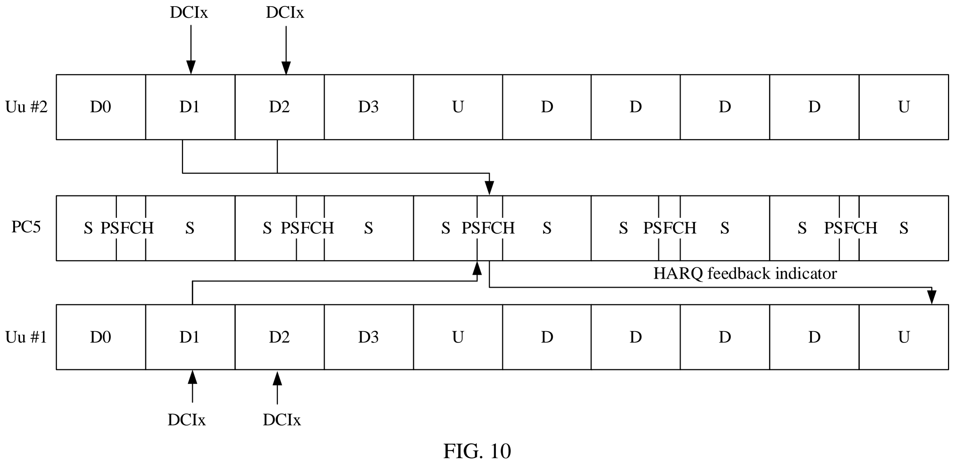

FIG. 10 is a diagram of a PUCCH for transmitting HARQ-ACK information according to this application;

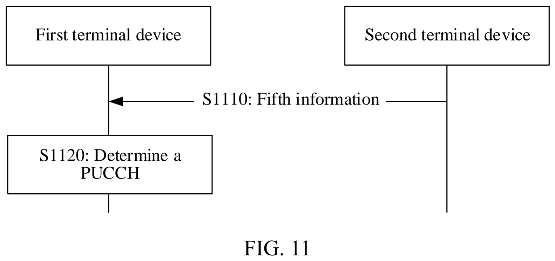

FIG. 11 is a schematic flowchart of another communication method according to this application;

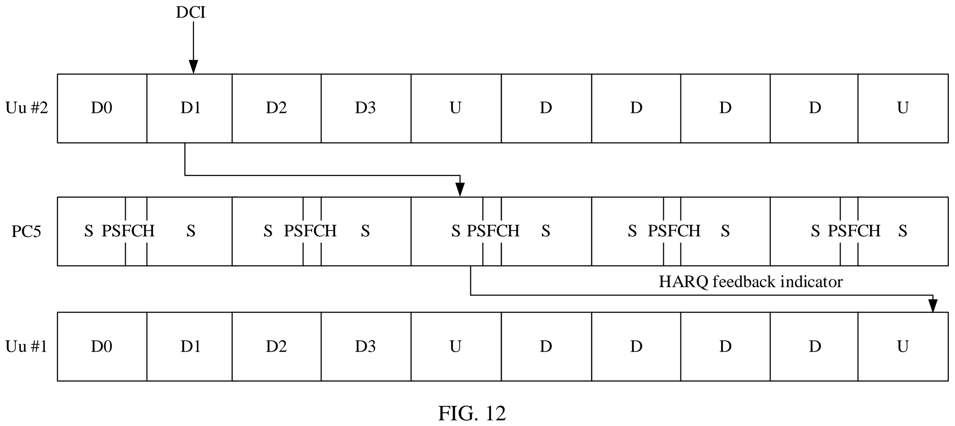

FIG. 12 is a diagram of multicasting DCI by a network device according to this application;

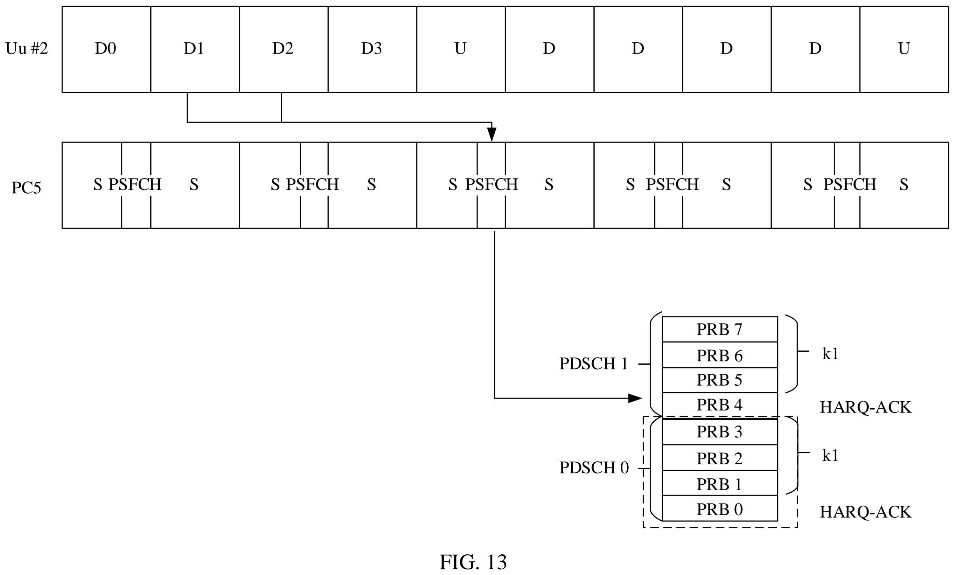

FIG. 13 is a diagram of transmitting HARQ-ACK information through a PSFCH according to this application;

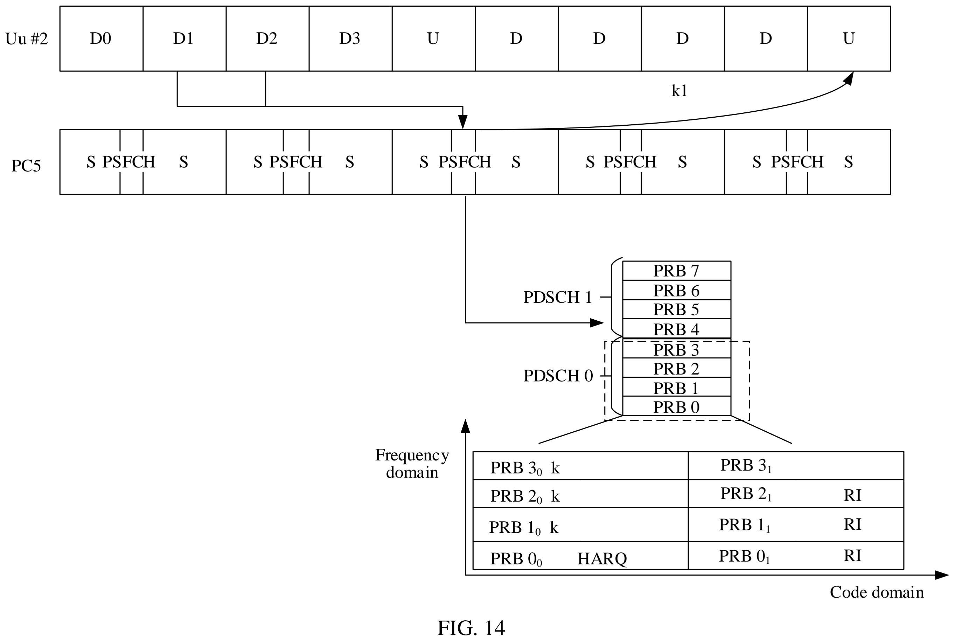

FIG. 14 is another diagram of transmitting HARQ-ACK information through a PSFCH according to this application;

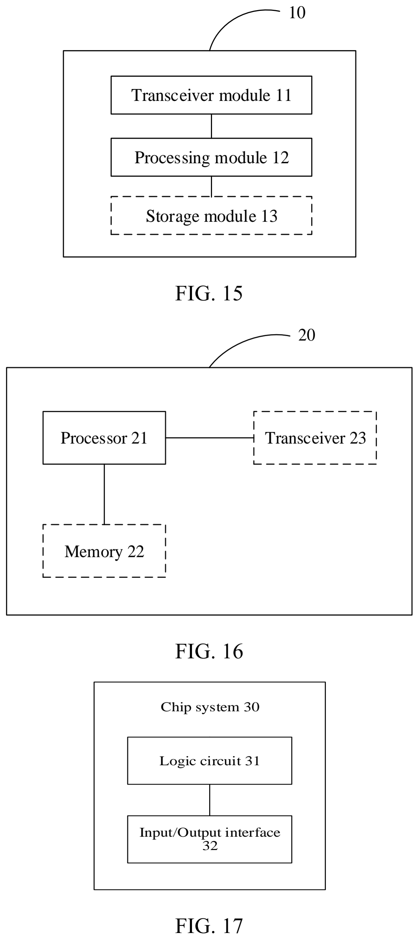

FIG. 15 is a block diagram of a communication apparatus according to an embodiment of this application;

FIG. 16 is a diagram of another communication apparatus according to an embodiment of this application; and

FIG. 17 is a diagram of a chip system according to an embodiment of this application.

## DESCRIPTION OF EMBODIMENTS

The following describes technical solutions in embodiments of this application in detail with reference to the accompanying drawings.

The technical solutions in embodiments of this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system.

A real-time broadband communication (Real-time broadband communication, RTBC) scenario in the 5G new vision aims to support a large bandwidth and a low interaction latency. A goal is to improve a bandwidth under a given latency and a specific reliability requirement, and create immersive experience during interaction between people and a virtual world. An XR service with ultra-high bandwidth and ultra-low latency requirements poses more severe challenges to current 5G. The XR service includes a plurality of types of data, such as videos, audio, and other control signals. Video data usually includes several ultra-high-definition images. Each image undergoes compression coding, for example, high efficiency video coding (High efficiency video coding, HEVC). After the coding, a large data block is generated. A higher definition of a video usually indicates a larger data block.

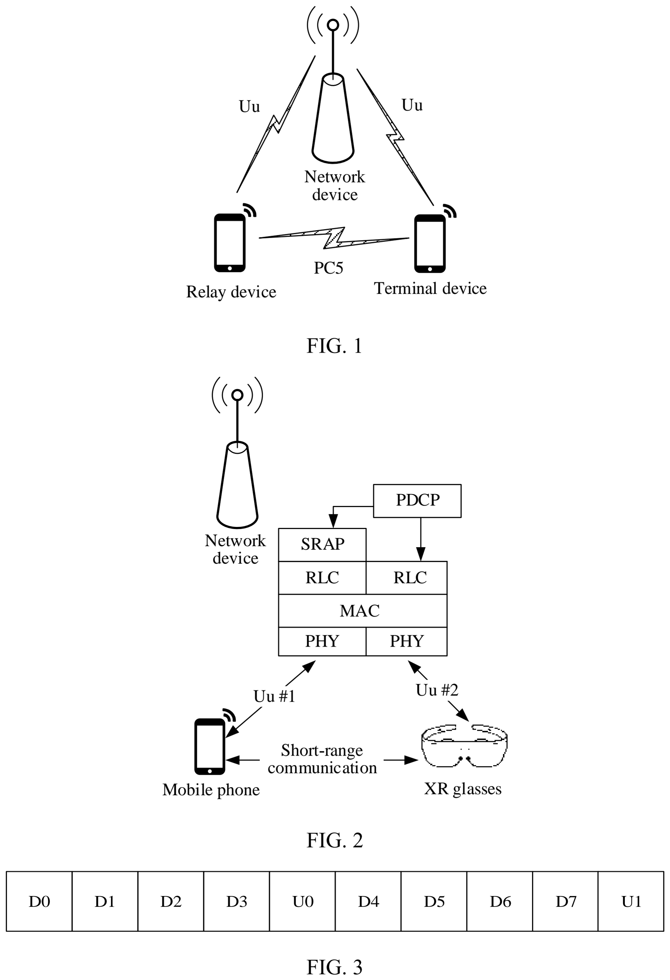

In a scenario in which an XR device is connected to a base station, the XR device needs to communicate with a server through the base station, that is, the XR device sends uplink data, for example, pose (pose) information of the XR device, audio data, and video data captured by a camera of the XR device, to the server through the base station. After receiving the data, the server generates corresponding downlink data, for example, a video to be displayed on the XR device, and sends the downlink data to the XR device through the base station. In cellular communication, because a base station is usually far away from a terminal device, to ensure uplink transmission communication quality, the terminal device needs to perform power amplification on a data signal before sending data. As a result, power consumption overheads of uplink transmission are relatively high. For an XR device, lightweight causes a limited battery capacity, and finally affects a battery life of the XR device. Therefore, power consumption reduction is a tough direction for improving experience of the XR device currently. An architecture for reducing power consumption overheads of uplink communication is proposed. To be specific, an XR device may send uplink information to a base station through a terminal device. For ease of understanding, the following briefly describes, with reference to FIG. 1 and FIG. 2, a communication architecture for reducing power consumption overheads of uplink communication in this application.

For example, FIG. 1 is a diagram of a communication architecture according to an embodiment of this application. The communication architecture includes a network device, a relay device, and a terminal device.

The terminal device (terminal equipment) in embodiments of this application may be an access terminal, a subscriber unit, a subscriber station, a mobile station, a relay station, a remote station, a remote terminal, a mobile device, a user terminal (user terminal), user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), a terminal device in a future internet of vehicles, or the like. This is not limited in embodiments of this application.

For example, in embodiments of this application, the wearable device may also be referred to as a wearable intelligent device or the like, and is a general term of wearable devices that are intelligently designed and developed for daily wear by using a wearable technology, such as glasses, gloves, watches, clothing, and shoes. The wearable device is a portable device that is directly worn on a body or integrated into clothes or an accessory of a user. The wearable device is not only a hardware device, but also implements a powerful function through software support, data exchange, and cloud interaction. In a broad sense, the wearable intelligent device includes a full-featured device that may implement complete or partial functions without depending on a smartphone, for example, a smartwatch or smart glasses. In addition, the device may alternatively be a portable device that is dedicated to only one type of application function and needs to be used together with another device such as a smartphone, for example, various smart bands or smart jewelry for monitoring physical signs.

In addition, in embodiments of this application, the terminal device may alternatively be a terminal device in an IoT system. IoT is an important part of future information technology development. A main technical feature of IoT is that an article is connected to a network by using a communication technology, to implement an intelligent network of man-machine interconnection and interconnection between things. In embodiments of this application, the IoT technology can implement massive connections, deep coverage, and terminal power saving by using, for example, a narrow band (narrow band, NB) technology.

In addition, in embodiments of this application, the terminal device may alternatively include a sensor. Main functions include collecting data (some terminal devices), receiving control information and downlink data from a network device, sending an electromagnetic wave, and transmitting uplink data to the network device.

The relay device (relay equipment) in embodiments of this application may be a terminal device. Refer to the foregoing descriptions of the terminal device. In other words, the relay device and the terminal device in this application may be two different terminal devices, and the terminal devices may directly communicate with each other. For example, direct communication between the terminal devices may be implemented by using a device-to-device (device-to-device, D2D) technology. The relay device may relay (relay) information between a terminal device and a network device.

The network device in embodiments of this application may be any communication device that has wireless sending and receiving functions and that is configured to communicate with a terminal device. The device includes but is not limited to: an evolved NodeB (evolved NodeB, eNB), a radio network controller (radio network controller, RNC), a NodeB (NodeB, NB), a home base station (home evolved NodeB, HeNB, or home NodeB, HNB), a baseband unit (baseBand unit, BBU), or an access point (access point, AP), a wireless relay node, a wireless backhaul node, a transmission point (transmission point, TP), a transmission and reception point (transmission and reception point, TRP), or the like in a wireless fidelity (wireless fidelity, Wi-Fi) system, or may be a gNB or a transmission point (TRP or TP) in a 5G system such as an NR system, or one antenna panel or a group of antenna panels (including a plurality of antenna panels) of a base station in a 5G system, or may be a network node that forms a gNB or a transmission point, for example, a baseband unit (BBU) or a distributed unit (distributed unit, DU).

The network device and the terminal device may be deployed on land, including an indoor or outdoor device, a handheld device, or a vehicle-mounted device; or may be deployed on a water surface; or may be deployed on a plane, a balloon, or a satellite in the air. A scenario in which the network device and the terminal device are located is not limited in embodiments of this application.

In embodiments of this application, the terminal device or the network device includes a hardware layer, an operating system layer running above the hardware layer, and an application layer running above the operating system layer. The hardware layer includes hardware such as a central processing unit, a memory management unit (memory management unit, MMU), and memory (also referred to as main memory). The operating system may be any one or more computer operating systems that implement service processing through a process (process), for example, a Linux® operating system, a Unix® operating system, an Android® operating system, an iOS® operating system, or a Windows® operating system. The application layer includes applications such as a browser, an address book, word processing software, and instant communication software.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium includes but is not limited to a magnetic storage component (for example, a hard disk drive, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media configured to store information. The term "machine-readable storage medium" may include but is not limited to a radio channel, and various other media that can store, include, and/or carry instructions and/or data.

It should be understood that FIG. 1 is merely a simplified diagram of an example for ease of understanding. The communication system 100 may further include another network device or may further include another terminal device (not shown in FIG. 1). For example, the communication system 100 may further include a core network device. An access network device provides a radio access connection for the terminal device, and may send data to the terminal device or receive data sent by the terminal device. In addition, the access network device is also connected to the core network device, and may forward, to a core network, the data received from the terminal device, or receive, from the core network, data that needs to be sent to the terminal device.

For example, an example in which the relay device shown in FIG. 1 is a mobile phone and the terminal device is XR glasses is used to describe how to reduce power consumption overheads of uplink communication of the XR glasses, as shown in FIG. 2. FIG. 2 is a diagram of a scenario in which XR glasses communicate with a network device through a mobile phone according to an embodiment of this application.

It can be learned from FIG. 2 that the network device and the XR glasses may communicate with each other in a multipath manner. The multipath includes: (1) The XR glasses directly communicate with the network device through a communication interface (for example, Uu #2). (2) The XR glasses communicate with the mobile phone via a short range (for example, a sidelink (sidelink, SL)), and the mobile phone communicates with the network device through a communication interface (for example, Uu #1).

Specifically, a packet data convergence protocol (packet data convergence protocol, PDCP) layer of the network device is divided into two bearers. One bearer (referred to as a bearer #1 below) is used to establish a link that is from the XR glasses to the network device and on which the mobile phone is used as a relay (relay), and the other bearer (referred to as a bearer #2 below) is a direct link between the XR glasses and the network device.

With respect to the bearer #1, for downlink transmission (that is, transmission from the network device to the XR glasses), the bearer #1 transfers data with an added PDCP header to a sidelink relay adaptation protocol (sidelink relay adaptation protocol, SRAP) layer. After adding a corresponding header, the SRAP layer delivers the data to a corresponding radio link control (radio link control, RLC) layer. The data is forwarded to a media access control (media access control, MAC) layer after a header is added. Then, the data is transferred to the mobile phone through a physical (physical, PHY) layer (for example, PHY #1 shown in FIG. 2). The mobile phone then transfers the data to the XR glasses through short-range communication (for example, an SL).

Similarly, with respect to the bearer #1, for uplink, the XR glasses transmit data from an application layer to the mobile phone through the SL, and then the mobile phone transmits the data to the network device. A process thereof is reverse to the foregoing downlink transmission process, and details are not described again.

With respect to the bearer #2, for downlink transmission (that is, transmission from the network device to the XR glasses), because relay via the mobile phone is not needed, there is no SRAP layer in a protocol stack of the bearer #2. The PDCP delivers data to an RLC, and then the MAC transmits the data to the XR glasses through a physical layer (for example, PHY #2 shown in FIG. 2).

Similarly, with respect to the bearer #2, for uplink, the XR glasses directly transmit data from an application layer to the network device.

Uu #1 is a physical connection between the mobile phone and a base station, Uu #2 is a physical connection between the glasses and the base station, and Uu #1 and Uu #2 may be in a same frequency band, or may be in different frequency bands. Further, the mobile phone and the XR glasses perform SL connection through a PC5 interface, and a frequency band of PC5 may be the same as or different from that of Uu #1 or Uu #2.

To reduce uplink transmission power consumption of the XR glasses, for uplink data (for example, pose (pose) information of the XR device, audio data, and video data captured by a camera of the XR device), the XR glasses may transfer the data to the mobile phone, and then the mobile phone transfers the data through Uu #1. Because the XR glasses and the mobile phone usually communicate with each other within a short range, a distance from the XR glasses to the mobile phone is far less than a distance from the XR glasses to the base station. Therefore, uplink transmission power consumption of the glasses is effectively reduced. For downlink communication, as shown in FIG. 2, data from a server may be sent to the XR glasses through two links (for example, a link #1 for transmission via Uu #1 and PC 5, and a link #2 for transmission via Uu #2). When Uu #1 and Uu #2 are in different frequency bands, using the two links is equivalent to increasing a link bandwidth, and therefore a transmission rate can be effectively improved.

For ease of understanding embodiments of this application, some basic concepts in this application are briefly described. It should be understood that the basic concepts described below are described by using basic concepts specified in an NR protocol as an example, but embodiments of this application are not limited to being applied to only an NR system. Therefore, standard names appearing when the NR system is used as an example for description are all functional descriptions, and specific names are not limited, indicate only functions of a device, and may be correspondingly extended to another future system.

1. HARQ-ACK information feedback in a cellular network: In the cellular network, after a network device schedules a physical downlink shared channel (Physical downlink shared channel, PDSCH) for a terminal device by using downlink control information (downlink control information, DCI), the terminal device determines, based on indication information in the DCI, a physical uplink control channel (physical uplink control channel, PUCCH) that carries HARQ-ACK information of the PDSCH.

Specifically, in addition to indicating the PDSCH, the DCI also carries a field indicating the PUCCH that carries the HARQ-ACK information corresponding to the PDSCH. For example, a k1 value, that is, an offset time (offset time) between the PDSCH and the PUCCH, is indicated by using a PDSCH HARQ-ACK information timing indicator (PDSCH-to-HARQ_feedback timing indicator) field. It should be noted that the offset time indicated in the DCI is an index, and the index points to one of a group of offset times.

Specifically, the network device configures a group of k1 values for the terminal device by using higher layer signaling, for example, a radio resource control (radio resource control, RRC) message. When scheduling the PDSCH by using the DCI, the network device indicates one k1 in the DCI, where the k1 is one of the foregoing group of k1 values. In addition, the DCI also indicates a PUCCH resource carrying the HARQ-ACK information. For example, the DCI indicates, by using PUCCH resource indication information (PUCCH resource indicator), an index of the used PUCCH resource.

For ease of understanding, feedback of the HARQ-ACK information of the PDSCH is described in detail with reference to FIG. 3. A carrier whose time division duplex (time division duplex, TDD) configuration is 4:1 can be seen in FIG. 3. To be specific, each TDD cycle has four downlink slots (for example, D0, D1, D2, and D3 in a TDD cycle and D4, D5, D6, and D7 in another TDD cycle shown in FIG. 3) and one uplink slot (for example, U0 in a TDD cycle and U1 in another TDD cycle shown in FIG. 3).

The network device configures a group of k1 values or a group of PDSCH reception candidates (candidate PDSCH reception) for the terminal device by using indication information (for example, dl-DataToUL-ACK-r16) in a PUCCH configuration (PUCCH-Config) of higher layer signaling such as an RRC message, where a quantity usually does not exceed 8. For example, dl-DataToUL-ACK-r16={2, 3, 4, 5, 6, 7}. In this case, for any uplink slot, for example, U1 in FIG. 3, HARQ-ACK information of {2, 3, 4, 5, 6, 7} previous slots that can be used to transmit a PDSCH may all be fed back in U1.

Specifically, U1 in FIG. 3 is still used as an example. Before U1, the second slot is D6, the third slot is D5, the fourth slot is D4, the fifth slot is U0 (which cannot be used to transmit a PDSCH, and therefore, a HARQ codebook does not need to be calculated), the sixth slot is D3, and the seventh slot is D2. HARQ-ACK information of PDSCHs scheduled in D2 to D6 may all be fed back in U1.

For example, the network device schedules a PDSCH in the slot D2 by using DCI, and the DCI further indicates a k1 index. For example, if PDSCH-to-HARQ_feedback timing indicator-'000' (because dl-DataToUL-ACK-r16 includes six values, this indication field includes ceil($\log_2$(quantity in dl-DataToUL-ACK-r16))=3 bits), it indicates that the first value, namely, 2, in dl-DataToUL-ACK-r16 is indicated. In other words, a HARQ of the PDSCH in D2 is fed back in U0. If PDSCH-to-HARQ_feedback timing indicator='101', that is, the sixth value, namely, 7, HARQ-ACK information of the PDSCH in D2 is fed back in U1.

2. PDSCH transmission opportunity: The PDSCH transmission opportunity in this application means a quantity of HARQ-ACK information that is of a PDSCH and that can be transmitted on a time-frequency resource, and a plurality of PDSCH transmission opportunities may be referred to as a PDSCH transmission opportunity set. For example, if a quantity of HARQ-ACK information that is of a PDSCH and that can be transmitted on a time-frequency resource #1 (for example, a PSSCH, a PSFCH, or a PUCCH) is 2, a PDSCH transmission opportunity is 2.

3. Semi-static codebook: HARQ-ACK information feedback on a PUCCH is usually classified into two forms: a semi-static codebook (also referred to as a type 1 (type1)) and a dynamic codebook (type 2 (type2)).

For a quantity of bits of a semi-static codebook of a PUCCH, all PDSCH transmission opportunities that can correspond to the PUCCH need to be considered. As shown in FIG. 3, reception candidates of PDSCHs transmitted in D2 to D6 need to be considered for a PUCCH codebook in U1. It should be understood that because mini-slot (mini-slot) scheduling exists (for example, one slot includes 14 symbols, each PDSCH occupies only several symbols, and more than one PDSCH transmission opportunity may exist in one slot), a quantity of candidates of the PDSCHs transmitted in D2 to D6 is not necessarily 5, and may be a value greater than 5. For details, refer to a PDSCH-time domain resource allocation list (PDSCH-time domain resource allocation list) configured by using a higher layer message. Table 1 shows a time domain indication manner of time domain resource allocation (time domain resource allocation, TDRA).

Table 1

| Row index (Row index) | DMRS-TypeA-Position | PDSCH mapping type | $k_0$ | S | L |
|---|---|---|---|---|---|
| 1 | 2 | Type A | 0 | 2 | 12 |
| | 3 | Type A | 0 | 3 | 11 |
| 2 | 2 | Type A | 0 | 2 | 10 |
| | 3 | Type A | 0 | 3 | 9 |
| 3 | 2 | Type A | 0 | 2 | 9 |
| | 3 | Type A | 0 | 3 | 8 |
| 4 | 2 | Type A | 0 | 2 | 7 |
| | 3 | Type A | 0 | 3 | 6 |
| 5 | 2 | Type A | 0 | 2 | 5 |
| | 3 | Type A | 0 | 3 | 4 |
| 6 | 2 | Type B | 0 | 9 | 4 |
| | 3 | Type B | 0 | 10 | 4 |
| 7 | 2 | Type B | 0 | 4 | 4 |
| | 3 | Type B | 0 | 6 | 4 |
| 8 | 2, 3 | Type B | 0 | 5 | 7 |
| 9 | 2, 3 | Type B | 0 | 5 | 2 |
| 10 | 2, 3 | Type B | 0 | 9 | 2 |
| 11 | 2, 3 | Type B | 0 | 12 | 2 |
| 12 | 2, 3 | Type A | 0 | 1 | 13 |
| 13 | 2, 3 | Type A | 0 | 1 | 6 |
| 14 | 2, 3 | Type A | 0 | 2 | 4 |
| 15 | 2, 3 | Type B | 0 | 4 | 7 |
| 16 | 2, 3 | Type B | 0 | 8 | 4 |

Specifically, Table 1 includes 16 rows, and each row is further divided into information such as a row index, a type A demodulation reference signal (demodulation reference signal, DMRS) position (dmrs-TypeA-Position), a PDSCH mapping type (PDSCH mapping type), $k_0$, S, and L. DMRS is a demodulation reference channel, and is used by a receive end to evaluate a channel to facilitate signal demodulation. dmrs-TypeA-Position is for a case that a PDSCH mapping type is the type A, where 2 or 3 indicates that a DMRS signal is on the second or third symbol in a slot in which a PDSCH is located. PDSCH mapping type indicates a mapping type of a PDSCH. When the mapping type is the type A, a start symbol of the PDSCH is 0 to 3, that is, any one of the first to fourth symbols. When the mapping type is the type B, a start symbol of the PDSCH is 0 to 12, that is, any one of the first to thirteenth symbols. $k_0$ represents a time offset of the PDSCH relative to corresponding DCI, and is measured in slots. S represents a start symbol position of the PDSCH, and is counted from 0. L represents a total quantity of symbols occupied by the PDSCH, and is counted from 1.

For example, when the mapping type B is configured for a terminal device, according to Table 1, when a row index is 8, a corresponding PDSCH occupies seven symbols starting from the fifth symbol in one slot, that is, symbols 5 to 11; or when a row index is 11, a corresponding PDSCH occupies two symbols starting from the twelfth symbol in one slot, that is, symbols 12 and 13. It can be learned that the PDSCHs corresponding to the row index 8 and the row index 11 do not overlap in one slot. Therefore, there may be a plurality of PDSCHs in one slot. Therefore, with respect to the semi-static codebook, for a quantity of PDSCH candidates included in one PUCCH, jointly refer to a K1 set and a TDRA list.

For simplicity, an example in which only the mapping type A exists in Table 1 is used. In this case, one PUCCH semi-static codebook includes 5 bits, respectively corresponding to PDSCHs in D2 to D6. When DCI and a corresponding PDSCH are received in a corresponding slot, a HARQ-ACK information bit is mapped based on a data channel decoding result of the PDSCH. If no DCI is detected in the slot, a NACK is fed back at a corresponding bit position.

4. Dynamic codebook: A disadvantage of the foregoing semi-static codebook is that the codebook is fixed, and a resource waste may be caused. Therefore, the dynamic codebook is further proposed, and the dynamic codebook performs on-demand feedback based on an actual quantity of received data. However, because a terminal device may miss detecting DCI, to enable the dynamic codebook, a 2-bit downlink assignment index (downlink assignment index) usually needs to be added to the DCI, for the terminal device to detect a quantity of received DCI.

For example, refer to a feedback status shown in FIG. 3. A network device respectively schedules three PDSCHs in slots D4, D5, and D6 by using three pieces of DCI, and downlink assignment indices (downlink assignment index, DAI) corresponding to the DCI are '01', '10', and '11' respectively. A terminal device receives DCI in D4 in FIG. 3, where a corresponding DAI index is '01'. The terminal device misses detecting DCI in D5, and receives DCI in D6, where a corresponding index is '11'. In this case, the terminal device indicates that the DCI is missing in detection between D4 and D6, and therefore feeds back 3-bit HARQ-ACK information, which corresponds to the PDSCHs corresponding to D4, D5, and D6. Because the DCI is missing in detection in D5, the terminal device feeds back a NACK at a corresponding bit.

5. HARQ-ACK information feedback on a sidelink: In a sidelink scenario (that is, communication between terminal devices), for example, in a scenario of communication between the relay device and the terminal device shown in FIG. 1 or communication between the XR glasses and the mobile phone shown in FIG. 2, a sending terminal device may transmit data to a peer end through a physical sidelink shared channel (physical sidelink shared channel, PSSCH), and receive a decoding result fed back by a terminal device on a physical sidelink feedback channel (physical sidelink feedback channel, PSFCH). The PSFCH is configured by using higher layer signaling, and has a periodicity, and a periodicity value of the PSFCH may be $N_{PSSCH}^{PSFCH} = 0,1,2,4$. 0 represents that there is no PSFCH. In addition to this, one PSFCH is included in every one, two, or four slots, and the PSFCH occupies a second-to-last symbol in a slot. Because a receive power of a terminal device may change on an orthogonal frequency division multiplexing (orthogonal frequency division multiplexing, OFDM) symbol on which the PSFCH is located, a third-to-last symbol in the slot is also used to send the PSFCH, to assist the receiving terminal device in performing automatic gain control (automatic gain control, AGC) adjustment. In addition, terminal devices that send the PSSCH and the PSFCH are different. Therefore, an additional symbol (that is, a fourth-to-last symbol) needs to be added before two PFSCHs for send/receive conversion of the terminal devices.

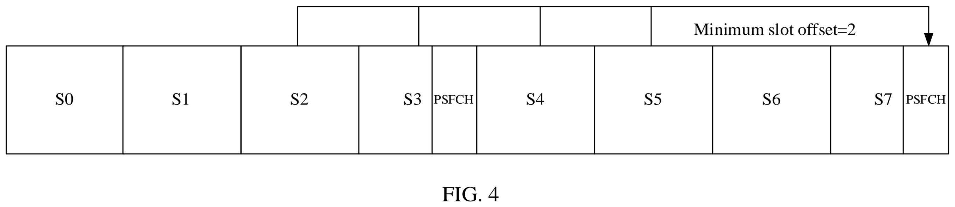

FIG. 4 shows a time relationship between a PSSCH and a PSFCH, where a PSFCH period $N_{PSSCH}^{PSFCH}$ is 4, that is, one PSFCH appears every four PSSCHs, and the PSFCH and the PSSCH share 14 symbols of one slot. In addition, considering that the terminal device needs processing time after receiving data, for example, time from decoding after receiving the PSSCH to generation of information such as a corresponding HARQ, in this case, the higher layer signaling indicates, by using a minimum slot offset (sl-minTimeGapPSFCH) parameter of a sidelink PSFCH, a minimum slot offset of a PSFCH carrying HARQ-ACK information of the PSSCH. That is, the HARQ-ACK information of the PSSCH needs to be fed back on a PSFCH in a slot that is at least sl-minTimeGapPSFCH later. As shown in FIG. 4, when sl-minTime-GapPSFCH=2, HARQ-ACK information feedback of PSSCHs in S0 and S1 may be transmitted through a first PSFCH, and HARQ-ACK information feedback of PSSCHs in S2 to S5 may be transmitted through a second PSFCH. A quantity of PSSCHs corresponding to each PSFCH is usually determined by the PSFCH period $N_{PSSCH}^{PSFCH}$. However, a case in which a PSFCH does not exist may occur. For example, if a sidelink synchronization signal block (sidelink synchronization signal block, S-SSB) is sent in a slot or sidelink control information (sidelink control information, SCI) indicates that a PSFCH is canceled, the PSFCH period is damaged. In this case, one PSFCH may correspond to more than four PSSCH HARQs. A specific quantity depends on a quantity of PSSCHs that satisfy sl-minTimeGapPSFCH.

For example, if the first PSFCH in FIG. 4 does not exist for a specific reason, HARQ-ACK information feedback corresponding to PSSCHs in S0 to S5 is all transmitted on the second PSFCH.

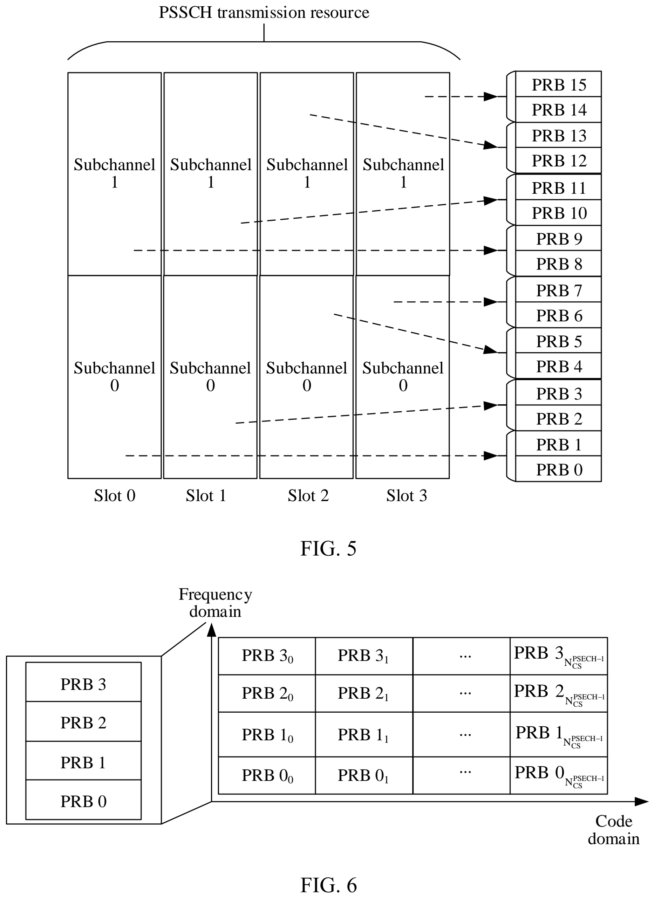

FIG. 4 shows a time domain relationship between a HARQ of a PSSCH and a PSFCH. Further, FIG. 5 shows a frequency domain relationship between HARQ-ACK information of a PSSCH and a PSFCH, that is, HARQ bits of the PSSCH are transmitted through specific frequency domain resources, for example, physical resource blocks (physical resource block, PRB), of the PSFCH. As shown in FIG. 5, one PSFCH PRB set includes 16 PRBs, and this parameter may be configured by using higher layer signaling. For example, a sidelink resource pool configuration (SL-PSFCH-Config-r16) parameter in sidelink resource pool (SL-ResourcePool) signaling in an RRC message is used to configure a quantity of PRBs of a PSFCH. Specifically, a PSFCH transmission resource set is divided into a plurality of subsets based on a PSFCH period parameter in resource pool configuration information and a quantity of subchannels that can be used for PSSCH transmission, and a PSFCH transmission resource in each subset corresponds to PSSCH transmission in one slot and one subchannel.

For example, if the PSFCH period is $N_{PSSCH}^{PSFCH}$, a resource pool includes $N_{subch}$ subchannels (configured by using higher layer signaling), and a configured quantity of PRBs of the PSFCH is $M_{PRB,set}^{PSFCH}$, a quantity of PRBs of a PSFCH corresponding to one PSSCH subchannel in one slot is $M_{subch,slot}^{PSFCH} = M_{PRB,set}^{PSFCH}/(N_{subch} \cdot N_{PSSCH}^{PSFCH})$. For a PSSCH sent on a j$^{th}$ subchannel in an i$^{th}$ slot, available PRBs of a PSFCH corresponding to the PSSCH are

$$[(i + j \cdot N_{PSSCH}^{PSFCH}) \cdot M_{subch,slot}^{PSFCH}, (i + 1 + j \cdot N_{PSSCH}^{PSFCH}) \cdot M_{subch,slot}^{PSFCH} - 1]$$, and these PRBs form a PSFCH transmission resource subset. As shown in FIG. 5, the PSFCH period is four slots, that is, one PSFCH slot is corresponding to four PSSCH slots, the resource pool includes two subchannels, and the resource pool configuration information configures 16 PRBs for transmitting a PSFCH. Therefore, one subchannel is corresponding to PRBs of two PSFCHs, and a correspondence between a subchannel of a PSSCH and a PRB of a PSFCH is in a sequence of time domain first and then frequency domain. As shown in FIG. 5, a subchannel 0 in a slot 0 corresponds to a PRB 0 and a PRB 1 of a PSFCH, a subchannel 0 in a slot 1 corresponds to a PRB 2 and a PRB 3 of the PSFCH, and so on.

In addition, for a PRB of a PSFCH, feedback results of PSSCHs of a plurality of UEs may be multiplexed to the PRB of the PSFCH in a code division multiplexing (code division multiplexing, CDM) manner. A quantity of PSFCHs available for CDM in one PRB is determined by a parameter $N_{CS}^{PSFCH}$, and the parameter may be configured by using higher layer signaling. A transmission resource set of a PSFCH corresponding to a PSSCH is

$$R_{PRB,CS}^{PSFCH} = N_{type}^{PSFCH} \cdot M_{subch,slot}^{PSFCH} \cdot N_{CS}^{PSFCH}$$. When a PSFCH transmission resource is determined based on an index of a start subchannel occupied by the PSSCH, $N_{type}^{PSFCH} = 1$. For example, when a PSSCH occupies a slot 0, regardless of whether the PSSCH occupies a subchannel 0 or subchannels 0 and 1, a transmission resource of a PSFCH corresponding to the PSSCH is a PRB 0 and a PRB 1. When the transmission resource of the PSFCH is determined based on indices of all subchannels occupied by the PSSCH, $N_{type}^{PSFCH} = N_{subch}^{PSSCH}$, where $N_{subch}^{PSSCH}$ is a quantity of subchannels occupied by the PSSCH. For example, if a PSSCH occupies a subchannel 0 in a slot 0, a PSFCH corresponding to the PSSCH is a PRB 0 and a PRB 1. If the PSSCH occupies a subchannel 0 and a subchannel 1 in a slot 0, a transmission resource of the corresponding PSFCH is a PRB 0, a PRB 1, a PRB 8, and a PRB 9. One PSFCH corresponds to $R_{PRB,CS}^{PSFCH}$ PSFCH transmission resources. A terminal determines, in the PSFCH transmission resource set according to the following formula, a transmission resource $(P_{ID} + M_{ID}) \, mod \, R_{PRB,CS}^{PSFCH}$ corresponding to a PSSCH, where $P_{ID}$ indicates ID information of UE that sends the PSSCH, that is, a source ID carried in an SCI format 2-A or 2-B, and $M_{ID}$ indicates an ID of receiving UE in the communication group, and may be determined by using a destination ID in the SCI format 2-A or 2-B. In unicast or the foregoing second feedback manner (a PSFCH transmission resource is determined based on indices of all subchannels occupied by a PSSCH), MID=0. Therefore, a receive end in the group may determine different PSFCH transmission resources according to the ID.

As shown in FIG. 6, a PSFCH corresponding to one PSSCH subchannel occupies four PRBs, and each PRB includes $N_{CS}^{PSFCH}$ cyclic shift pairs. UE may determine, based on a result of $(P_{ID} + M_{ID}) \, mod \, R_{PRB,CS}^{PSFCH}$ in a manner of frequency domain first and then code domain, a PRB and a cyclic shift pair for transmission. For example, if $(P_{ID} + M_{ID}) \, mod \, R_{PRB,CS}^{PSFCH} = 5$, the fifth PRB (calculated from 0), that is, $PRB_1$, based on frequency domain first and then code domain is used to transmit the PSFCH.

6. Sidelink scheduling: Currently, sidelink scheduling is classified into two modes: a mode 1 and a mode 2. The mode 1 is that a network device controls transmission of an SL, that is, the network device indicates, by using DCI, a sending terminal device (txUE) to send data to a receiving terminal device (rxUE) through a PSSCH. Specifically, for a 5G new radio (new radio, NR) sidelink, the network device indicates sending of the txUE by using a DCI format 3_0. For a long term evolution (long term evolution, LTE) sidelink, the network device indicates sending of the txUE by using a DCI format 3_1. Each piece of DCI may indicate sending of N (usually not greater than 3) PSSCHs at a time. Using NR as an example, indication fields of the DCI format 3_0 include the following:

(1) Resource pool index (resource pool index): A network device may configure a plurality of resource pools and corresponding indices for a terminal device. When scheduling a side transmission resource by using DCI, the network device needs to indicate resource pool index information in the DCI. The terminal device determines, based on the resource pool index information, a resource pool to which the side transmission resource scheduled by using the DCI belongs. Different parameters, such as a quantity of subchannels and a subchannel size, may be configured for different resource pools.

(2) Time gap (time gap): is used to determine a time gap between a first sidelink transmission resource and a slot in which DCI is located. A time domain position of the first sidelink transmission resource may be determined based on such information and a time domain position of the DCI received by txUE.

(3) Time resource assignment (time resource assignment): A manner in which this information field indicates a time domain is the same as that in the SCI format 1-A, and this parameter is used to determine slot gaps between a first sidelink transmission resource and N-1 sidelink transmission resources other than the first sidelink transmission resource.

(4) Frequency domain start subchannel indicator for initial transmission (low index of the subchannel allocation to the initial transmission): indicates a lowest index of a subchannel occupied by a first sidelink transmission resource. Frequency domain start positions of a PSCCH and a PSSCH are aligned. Therefore, the frequency domain start positions of the PSCCH and the PSSCH can be determined based on such information.

(5) Frequency resource assignment (frequency resource assignment): A manner in which such information indicates a frequency domain resource is the same as that in the SCI format 1-A, and this parameter is used to determine a frequency domain resource size (a quantity of subchannels) of a sidelink transmission resource, and frequency domain start positions of N-1 sidelink transmission resources other than a first sidelink transmission resource.

(6) PUCCH resource indicator (PUCCH resource indicator): A base station configures a PUCCH resource set and a corresponding index by using higher layer signaling, and a PUCCH transmission resource is determined in the resource set by using this information field in DCI.

(7) Slot gap between a PSFCH and a PUCCH (PSFCH-to-HARQ feedback timing indicator): is used to determine a time gap between a PSFCH and a PUCCH. The PSFCH is used to carry HARQ-ACK information feedback of the PSSCH indicated by DCI. If a sidelink transmission resource allocated by a base station (network device) corresponds to at least one PSFCH, the slot gap indicates a slot gap between a transmission resource of a last PSFCH and a PUCCH transmission resource.

(8) HARQ process number (HARQ process number): indicates a HARQ process number corresponding to a sidelink transmission resource allocated by a network to a terminal.

(9) New data indicator (new data indicator, NDI): indicates whether sidelink data scheduled by DCI is newly transmitted. When sidelink data scheduled in the DCI format 3_0 is newly transmitted, the NDI is toggled; otherwise, the NDI is not toggled.

(10) Configuration index (configuration index): When a sidelink-configuration scheduling-radio network temporary identifier (SL-CS-RNTI) is configured for a terminal, the DCI format 3_0 may be used to activate or release a type-2 sidelink configured grant. A network may configure a plurality of type-2 sidelink configured grants. The configuration index indicates which sidelink configured grant is activated or released by the DCI. When no SL-CS-RNTI is configured for UE, this field (information field) does not exist or has 0 bits.

(11) Counter sidelink assignment index (counter sidelink assignment index): The counter sidelink assignment index indicates a quantity of pieces of DCI that are accumulatively sent by a network and that are used to schedule a sidelink transmission resource, and a terminal determines, based on such information, a quantity of information bits during generation of a HARQ-ACK codebook.

When a terminal device receives the DCI format 3_0, a PSSCH is scheduled through a PSCCH (for example, in the SCI format 1-A) on a time-frequency domain resource indicated by the DCI. Same information fields in the DCI format 3_0 may be used for time resource assignment and frequency resource assignment in SCI.

7. Relay transmission of HARQ-ACK information of a PDSCH: After receiving a PDSCH delivered by a network device, a terminal device transmits, to a relay device through a PSFCH or a PSSCH, HARQ-ACK information corresponding to the PDSCH, and the relay device forwards the HARQ-ACK information to the network device.

Specifically, the HARQ-ACK information of the PDSCH may be transmitted through the PSFCH in the following manners:

Manner 1.1: A PDSCH transmission opportunity set is determined by using a periodic occurrence characteristic of the PSFCH, so as to determine a PRB of the PSFCH used for transmitting the HARQ-ACK information of the PDSCH. Specifically, based on a PSFCH period, a minimum time gap (minTimeGap) between a time unit for receiving the PDSCH and a time unit in which the PSFCH for sending the HARQ-ACK information of the PDSCH is located, and a subcarrier spacing (subcarrier spacing, SCS) of Uu #2 (or an SCS of PC5), a quantity of PDSCHs whose HARQ-ACK information can be transmitted by using a PRB of one PSFCH may be determined.

In a scenario shown in (a) in FIG. 7, a PSFCH period is 2, that is, one PSFCH appears every two SL slots, and minTimeGap is two slots, that is, a distance between the PSFCH and a closest slot in downlink slots corresponding to the PSFCH is two slots (a processing capability of the terminal device is usually considered for setting minTimeGap). In the scenario shown in (a) in FIG. 7, the SCS of Uu #2 is the same as the SCS of PC5. When only a PDSCH of the mapping type typeA in Table 1 exists, each PSFCH corresponds to two PDSCHs, that is, may be used to transmit HARQ-ACK information of two PDSCHs. When the SCS of Uu #2 is greater than the SCS of PC5, one PSFCH corresponds to more PDSCH transmission opportunities. Similarly, when the SCS of Uu #2 is smaller than the SCS of PC5, one PSFCH corresponds to fewer PDSCH transmission opportunities.

After the PDSCH transmission opportunity set is determined, a quantity of PDSCHs whose HARQ-ACK information may be transmitted through one PSFCH can be known. Therefore, a quantity of PRBs of a PSFCH occupied by HARQ-ACK information of each PDSCH can also be determined. For example, the PRBs of the PSFCH are evenly allocated to the HARQ-ACK information of the PDSCHs. For example, if 20 PRBs are configured for the PSFCH by using higher layer signaling, and a total quantity of elements in the PDSCH transmission opportunity set obtained according to the foregoing method is 5, the HARQ-ACK information of each PDSCH may be transmitted by using four PRBs.

Manner 1.2: A PDSCH transmission opportunity set is configured based on higher layer signaling (for example, the network device configures a group of PDSCH-to-PSFCH lists by using higher layer signaling, where several PDSCH-to-PSFCH time gap candidate values are included). Then, for any PSFCH, a PDSCH transmission resource candidate is determined for each PSFCH based on the PDSCH-to-PSFCH candidate. For example, the PDSCH-to-PSFCH time gap list includes three elements: {2, 3, 5}. For a PSFCH, PDSCHs corresponding to the second, third, and fifth slots before a slot in which the PSFCH is located form a PDSCH transmission opportunity set, as shown in (b) in FIG. 7.

Then, a quantity of PRBs corresponding to HARQ-ACK information of each PDSCH is determined for each PDSCH transmission opportunity based on the PDSCH transmission opportunity set and a quantity of PRBs of the PSFCH.

Manner 1.3: In a PDSCH transmission opportunity set determined in the foregoing semi-static manner, a PDSCH transmission opportunity only indicates that there may be HARQ-ACK information of a PDSCH to be transmitted at the time, but does not indicate that there is definitely HARQ-ACK information of a PDSCH. Therefore, PSFCH resources may be wasted.

In the case shown in manner 1.3, the PDSCH transmission opportunity set is determined based on an actual quantity of received PDSCHs. For example, PRBs of a PSFCH allocated by the network device are divided into a corresponding quantity of PRB subsets based on an actual quantity of PDSCHs transmitted on the PSFCH, and then transmission is performed.

To resolve a problem of missing detection of a PDSCH, a DAI field may be added to DCI to determine whether the DCI is missing in detection. When missing detection is found, a quantity of PDSCHs missing in detection needs to be counted during PSFCH division, and a NACK is transmitted on a corresponding PRB. For example, if a base station sends four PDSCHs, but it is found, based on a DAI, that the second DCI is missing in detection, PSFCH PRBs are divided into four subsets, and a NACK is fed back on a PRB of a PSFCH corresponding to the second PDSCH, or no information is sent.

Manner 1.4: A scenario of a plurality of terminal devices is considered. For example, there are a plurality of pairs of terminal devices and relay devices, and the terminal devices and the relay devices share a same SL resource. In this case, interference between the terminal devices needs to be considered. For example, a plurality of terminal devices simultaneously perform transmission by using a same SL resource.

In a possible manner, the plurality of terminal devices are enabled to share a same PSFCH resource pool in a CDM manner. For example, based on a cyclic shift pair $N_{CS}^{PSFCH}$ configured by using higher layer signaling, a group of PSFCH PRB resource sets may be shown in (c) in FIG. 7, where a code domain size depends on the cyclic shift pair $N_{CS}^{PSFCH}$, a frequency domain size depends on a quantity of PRBs, and a corresponding PRB index is usually found in a sequence of frequency domain first and then code domain. For example, when a PDSCH is transmitted on a PRB whose PRB index is 15, the PDSCH is transmitted on a sixteenth PRB (counted from an index 0), that is, a PRB 51, based on frequency domain first and then time domain. The PRB 51 may be understood as that a sequence corresponding to a HARQ feedback of the PDSCH is located on a PRB 5, and a specific offset is performed based on the cyclic shift pair

$N_{CS}^{PSFCH}$. Specifically, the offset value may be obtained by using a formula. For example, the index of the PRB is determined by using an ID of a terminal device, an ID of a relay device, and a sequence number of a PDSCH transmission opportunity.

Specifically, the HARQ-ACK information of the PDSCH may be transmitted through the PSSCH in the following manners:

Manner 2.1: After receiving the PDSCH, the terminal device feeds back the HARQ-ACK information to the relay device through the PSSCH, where a resource of the PSSCH may be indicated by using DCI for scheduling the PDSCH. For example, the network device indicates a resource pool of the PSSCH by using the DCI. For example, the DCI includes an indication field, used to indicate an index of the PSSCH resource pool, and frequency domain and time domain resources of the PSSCH.

In addition, the DCI may further indicate a position of a PSSCH slot that carries the HARQ-ACK information of the PDSCH. For example, a PDSCH-to-PSSCH time gap list is configured by using higher layer signaling (for example, an RRC message), and a slot offset of the PSSCH for transmitting the HARQ-ACK information of the PDSCH indicated by the DCI relative to the PDSCH is determined in a manner of indicating an index in the DCI. Therefore, there may be a case in which HARQ-ACK information of a plurality of PDSCHs is transmitted through one PSSCH.

After a PSSCH transmission resource for transmitting the HARQ-ACK information of the PDSCH is determined, the HARQ-ACK information of the PDSCH is transmitted to the relay device, for example, transmitted in a manner of a MAC CE, where the MAC CE may carry the HARQ-ACK information of the PDSCH. When one PSSCH transmits HARQ-ACK information of a plurality of PDSCHs, one MAC CE may be sent for HARQ-ACK information of each PDSCH, or one MAC CE is used to carry HARQ-ACK information of these PDSCHs, so that transmission opportunities of the plurality of PDSCHs are multiplexed into the PSSCH.

In addition, a case in which DCI is missing in detection may occur. To be specific, the network device sends the DCI to schedule a PDSCH, but the terminal device cannot receive the PDSCH because the terminal device does not detect the DCI, and cannot generate HARQ-ACK information of the corresponding PDSCH. In this case, one manner is to add corresponding information for HARQ-ACK information of each PDSCH, for example, add a HARQ process number, so that a mobile phone can determine, based on the HARQ process number, PDSCHs whose HARQ-ACK information is received. Alternatively, a maximum quantity of PDSCHs that may be corresponding to each PSSCH is determined based on a PDSCH transmission opportunity set, and then feedback is performed based on an actually received PDSCH. For example, there are three PDSCH transmission opportunities in total, and therefore MAC is sent for the three transmission opportunities. However, if the terminal device receives only the first and the second, HARQ-ACK information of the first two PDSCHs is generated based on an actual decoding result. Because the third is not received, a NACK is fed back at a corresponding information bit. Alternatively, the DCI may carry DAI indication information, which indicates a total quantity of DCI till the current DCI transmitted by the base station. For missing detection, for example, three pieces of DCI are sent, DAIs in the DCI respectively indicate 1, 2, and 3, and when the terminal device receives only a DAI 1 and a DAI 3, it may be found that DCI whose DAI is 2 is missing in detection.

Manner 2.2: The network device does not explicitly indicate a PSSCH resource for transmitting the HARQ-ACK information of the PDSCH, including not explicitly indicating parameters such as a PSSCH resource pool and a time-frequency domain resource, but the PSSCH transmission resource for transmitting the HARQ-ACK information of the PDSCH is determined in a semi-static manner. For example, if the network device semi-statically configures, for an SL by using higher layer signaling, a PSSCH resource used to transmit the HARQ-ACK information of the PDSCH, for example, semi-statically configures a resource pool, all PDSCHs received by the terminal device are sent on the configured PSSCH resource. Therefore, not only the PSSCH resource needs to be determined, but also a slot position of the PSSCH needs to be configured. This configuration parameter may be configured by using minTimeGap or a similar parameter, and is used to determine a time gap between the PDSCH and the PSSCH for transmitting the HARQ of the PDSCH. Because this parameter is configured by using higher layer signaling, this parameter is usually applicable to all PDSCHs of the UE whose HARQ-ACK information is transmitted through PC5. Similarly, to avoid missing detection of a PDSCH, a manner in which the DCI carries indication information, for example, a DAI, may also be used to indicate an accumulated value of PDSCHs.

In addition, to facilitate understanding of embodiments of this application, the following descriptions are provided.

First, in this application, "indicate" may include "directly indicate" and "indirectly indicate". When a piece of indication information is described as indicating A, the indication information may directly indicate A or indirectly indicate A, but it does not mean that the indication information necessarily includes A.

Information indicated by the indication information is referred to as to-be-indicated information. In a specific implementation process, there are a plurality of manners of indicating the to-be-indicated information. The to-be-indicated information may be sent as a whole, or may be divided into a plurality of pieces of sub-information for separate sending. In addition, sending periods and/or sending occasions of the sub-information may be the same or may be different. A specific sending method is not limited in this application. The sending periods and/or the sending occasions of the sub-information may be predefined, for example, predefined according to a protocol, or may be configured by a transmit end device by sending configuration information to a receive end device. The configuration information may include, but is not limited to, one or a combination of at least two of radio resource control signaling, MAC layer signaling, and physical layer signaling. The radio resource control signaling includes, for example, RRC signaling; the MAC layer signaling includes, for example, a MAC CE; and the physical layer signaling includes, for example, DCI.

Second, "at least one" shown in this application means one or more, and "a plurality of" means two or more. In addition, in embodiments of this application, "first", "second", and various numerical numbers (for example, "#1" and "#2") are merely used for differentiation for ease of description, and are not used to limit the scope of embodiments of this application. Sequence numbers of the following processes do not mean a sequence of execution. The sequence of execution of the processes should be determined according to functions and internal logic of the processes, and should not constitute any limitation on an implementation process of embodiments of this application. It should be understood that objects described in such a manner are interchangeable in proper cases, to describe solutions other than embodiments of this application. In addition, in embodiments of this application, words such as "810" and "820" are merely identifiers for ease of description, and do not limit a sequence of performing steps.

Third, in this application, words such as "example" or "for example" are used to represent giving examples, illustrations, or descriptions. Any embodiment or design solution described as "example" or "for example" in this application should not be construed as being more preferred or advantageous than other embodiments or design solutions. Specifically, the words such as "example" or "for example" are used to present related concepts in a specific manner.

Fourth, "storage" in embodiments of this application may be storage in one or more memories. The one or more memories may be separately disposed, or may be integrated into an encoder or a decoder, a processor, or a communication apparatus. Alternatively, a part of the one or more memories may be separately disposed, and a part of the one or more memories may be integrated into a decoder, a processor, or a communication apparatus. A type of the memory may be a storage medium in any form. This is not limited in this application.

Fifth, the "protocol" in embodiments of this application may be a standard protocol in the communication field, for example, may include an LTE protocol, an NR protocol, and a related protocol applied to a future communication system. This is not limited in this application.

Sixth, in embodiments of this application, "in a case of", "when", and "if" may be used interchangeably sometimes. It should be noted that, when a difference thereof is not emphasized, meanings to be expressed are consistent.

Seventh, in embodiments of this application, terms and English acronyms and abbreviations, such as radio resource control (RRC), are all examples provided for ease of description, and should not constitute any limitation on this application. This application does not exclude a possibility of defining another term that can implement a same or similar function in an existing or future protocol.

Eighth, the term "and/or" in this specification is merely an association relationship of associated objects, and indicates that three relationships may exist. For example, A and/or B may indicate the following three cases: Only A exists, both A and B exist, and only B exists. In addition, the character "/" in this specification usually indicates an "or" relationship between the associated objects.

With reference to FIG. 1, the foregoing briefly describes a scenario to which the communication method provided in embodiments of this application can be applied, describes basic concepts that may be used in embodiments of this application, and describes HARQ-ACK information feedback of a sidelink and HARQ-ACK information feedback of a cellular network in the basic concepts. Currently, after receiving a PDSCH, a terminal device feeds back a PDSCH decoding result to a relay device through a communication interface (for example, PC5) between the terminal device and the relay device. How the relay device forwards the decoding result becomes an urgent problem to be resolved. This application provides a communication method, so that after receiving HARQ-ACK information from the terminal device, the relay device may feed back the HARQ-ACK information to a network device.

It should be understood that the communication method provided in embodiments of this application may be applied to a system in which communication is performed by using a multiantenna technology, for example, the communication system 100 shown in FIG. 1. The communication system may include at least one network device, at least one terminal device, and at least one relay device.

It should be further understood that a specific structure of an execution body of a method provided in embodiments of this application is not specifically limited in embodiments shown below, provided that a program that records code for the method provided in embodiments of this application can be run to perform communication according to the method provided in embodiments of this application. For example, the method provided in embodiments of this application may be performed by a terminal device, or may be performed by a functional module that is in the terminal device that can invoke and execute a program.

FIG. 8 is a schematic flowchart of a communication method according to an embodiment of this application. The following steps are included.

S810: A first terminal device receives first information from a second terminal device through a first link. In other words, the second terminal device sends the first information to the first terminal device through the first link. The first information includes first HARQ-ACK information, the first HARQ-ACK information is HARQ-ACK information corresponding to first downlink data, and the first downlink data is downlink data sent by a network device to the second terminal device.

Specifically, the first downlink data may be the PDSCH described above, or may be other downlink data (for example, a PDCCH) sent by the network device to the second terminal device through a third link. A specific form of the first downlink data is not limited in this embodiment. For ease of description, an example in which the first downlink data is a PDSCH #1 is used below for description.

For example, the first terminal device may be any terminal device that establishes communication with the network device and the second terminal device. For example, in this embodiment, the first terminal device may be the relay device shown in FIG. 1 above, or may be the mobile phone shown in FIG. 2 above.

For example, the second terminal device may be any terminal device that establishes communication with the network device and the first terminal device. For example, in this embodiment, the second terminal device may be the terminal device shown in FIG. 1 above, or may be the XR glasses shown in FIG. 2 above.

The first link is a communication link between the first terminal device and the second terminal device. For example, the first link is a link for communication based on a communication interface #1 (for example, PC5), and may also be referred to as a first communication channel. The first channel or the like is used to describe a communication channel for direct communication between the first terminal device and the second terminal device.

In this embodiment, the second terminal device may receive the PDSCH #1 from the network device through the third link. For example, the network device sends DCI #1 to the second terminal device through the third link, where the DCI #1 is used to schedule the PDSCH #1 for the second terminal device.

The third link is a communication link between the second terminal device and the network device. For example, the third link is a link for communication based on a communication interface #3 (for example, Uu #2), and may also be referred to as a third communication channel. The third channel or the like is used to describe a communication channel for direct communication between the second terminal device and the network device.

It should be noted that, in this embodiment, how the second terminal device sends the first HARQ-ACK information to the first terminal device through the first link is not limited. For details, refer to a manner in which a terminal device transmits corresponding HARQ-ACK information to a relay device through an SL resource (for example, a PSFCH or a PSSCH) in "relay transmission of HARQ-ACK information of a PDSCH" described in the foregoing basic concepts. Details are not described herein again.

This embodiment mainly relates to how the first terminal device forwards the first HARQ-ACK information to the network device through the second link after the first terminal device receives the first HARQ-ACK information.

The second link is a communication link between the first terminal device and the network device. For example, the second link is a link for communication based on a communication interface #2 (for example, Uu #1), and may also be referred to as a second communication channel. The second channel or the like is used to describe a communication channel for direct communication between the first terminal device and the network device.

Further, after receiving the first HARQ-ACK information, the first terminal device may forward the first HARQ-ACK information to the network device through the second link. The method procedure shown in FIG. 8 further includes the following step.

S820: The first terminal device sends second information to the network device through the second link. In other words, the network device receives the second information from the first terminal device through the second link. The second information includes the first HARQ-ACK information.

It should be understood that, in this embodiment, a prerequisite that the first terminal device may send the first HARQ-ACK information to the network device through the second link is that the first terminal device has learned of a first transmission resource that can be used to transmit the first HARQ-ACK information on the second link. In this embodiment, the first terminal device may learn, in the following two manners, of the first transmission resource used to transmit the first HARQ-ACK information on the second link.

Manner 3.1: The network device indicates the first transmission resource in a dynamic indication manner. With reference to FIG. 9, the following describes in detail how the first terminal device learns of the first transmission resource in the case described in manner 3.1.

Manner 3.2: The second terminal device indicates the first transmission resource to the first terminal device. With reference to FIG. 11, the following describes in detail how the first terminal device learns of the first transmission resource in the case described in manner 3.2.

It should be understood that the foregoing manner 3.1 and manner 3.2 are merely examples for describing a manner in which the first terminal device determines the first transmission resource for transmitting the first HARQ-ACK information on the second link, and do not constitute any limitation on the protection scope of this application. The first transmission resource may be an unlicensed spectrum resource.

For ease of description, the following uses a PUCCH resource as the first transmission resource for description.

In the communication method shown in FIG. 8, after receiving the PDSCH, the second terminal device transmits the corresponding HARQ-ACK information to the first terminal device through the first link (for example, PC5), and then the first terminal device transmits the HARQ-ACK information to the network device. This prevents the second terminal device from directly sending the HARQ-ACK information to the network device, thereby reducing power consumption overheads caused by uplink HARQ-ACK information feedback performed by the second terminal device.

FIG. 9 is a schematic flowchart of another communication method according to this application. The method includes the following steps.

S910: The network device sends first control information to the first terminal device. In other words, the first terminal device receives the first control information from the network device.

Specifically, that the first terminal device determines the first transmission resource for transmitting the first HARQ-ACK information includes: determining specific time for transmitting the first HARQ-ACK information. For example, the first terminal device determines a first time unit in which the first terminal device sends the second information through the second link.

It should be understood that the first time unit determined by the first terminal device is a time unit for sending the second information and the first HARQ-ACK information. It may be understood that the first terminal device determines that a time unit for sending the first HARQ-ACK information is the first time unit. For example, if the first terminal device determines to send the first HARQ-ACK information in a slot, the first terminal device sends, in the slot, the second information carrying the first HARQ-ACK information.

For example, the first terminal device may determine the first time unit by determining a first time gap, where the first time gap is less than or equal to a time gap between the first time unit and a second time unit, and the second time unit is a time unit in which the first terminal device receives the first information through the first link, or the second time unit is a time unit in which the first terminal device receives the first control information through the second link, or the second time unit is a time unit in which the second terminal device receives the first downlink data (for example, the first terminal device determines the first downlink data based on DCI, and the first terminal device does not receive the data, but determines a time position of the data).

In a possible implementation, the first time gap is a time offset (time offset) between the first time unit and the second time unit. In this implementation, the first time unit is a first time unit that is the time offset later than the second time unit. It may be understood that the time gap between the first time unit and the second time unit is equal to the time offset.

In another possible implementation, the first time gap is a minimum time gap (minTimeGap) between the first time unit and the second time unit. In this implementation, the time gap between the first time unit and the second time unit is greater than or equal to the minimum time gap.

In the embodiment shown in FIG. 9, the network device may dynamically indicate a size of the first time gap by using the first control information.

In a possible implementation, the first control information is DCI #1 multicast by the network device. For example, the network device sends same DCI or sends DCI with same content to the first terminal device and the second terminal device. The DCI #1 indicates an SL time unit for feeding back HARQ-ACK information (for example, a time unit in which a PSFCH or a PSSCH for feeding back the first HARQ-ACK information is located) and a PUCCH time unit for feeding back HARQ-ACK information (for example, the foregoing first time unit).

How the DCI #1 indicates the SL time unit is not described in detail in this embodiment. That the DCI #1 indicates the first time unit may be: The DCI #1 indicates a time gap between the first time unit and a time unit in which the DCI #1 is received; or the DCI #1 indicates a first time gap between the first time unit and the SL time unit. In this way, after determining the time unit in which the DCI #1 is received from the network device or the SL time unit in which the first HARQ-ACK information is received from the second terminal device, the first terminal device may determine the first time unit based on the first time gap indicated by the DCI #1.

In another possible implementation, the first control information is control information separately sent by the network device to the first terminal device. For example, the network device sends DCI #1 for scheduling the PDSCH to the second terminal device, to determine a resource (for example, a PSSCH or PSFCH resource) for transmitting the first HARQ-ACK information of the PDSCH, and the network device sends DCI #2 for indicating a PUCCH transmission resource to the first terminal device. The DCI #2 further indicates the first time unit for sending the HARQ-ACK information of the PDSCH. The DCI #1 and the DCI #2 may be different DCI. For example, the DCI #1 and the DCI #2 have different content, or the DCI #1 and the DCI #2 occupy different time-frequency domain resources.

Compared with the DCI #1 sent by the network device to the second terminal device, the DCI #2 sent by the network device to the first terminal device may not need to indicate some PDSCH related information, for example, information such as a modulation and coding scheme (modulation and coding scheme, MCS), to reduce a payload of the DCI #2.

Optionally, when a PC5 resource (for example, a PSSCH or PSFCH resource) for feeding back the HARQ-ACK information of the PDSCH is semi-statically configured, that is, when the DCI #1 and the DCI #2 do not need to explicitly indicate a PC5 resource for transmitting the HARQ-ACK information of the PDSCH, the DCI #2 does not need to carry corresponding indication information, so that DCI payload overheads can be further reduced.

For example, the second terminal device may determine, based on a PSFCH period, a PDSCH transmission opportunity, a slot position corresponding to a PSFCH corresponding to the PDSCH, and a PRB resource of the PSFCH that carries the HARQ-ACK information of the PDSCH. Because the PSFCH period is semi-statically configured, no additional indication is needed in the DCI #1 and the DCI #2, thereby reducing DCI payload overheads.

For another example, a manner in which the second terminal device determines a time gap between the PSSCH and the PDSCH based on minTimeGap is also determined based on a semi-static configuration, and the DCI #1 and the DCI #2 do not need to carry indication information. The first terminal device may obtain, based on a slot in which the PDSCH is received, a PSFCH resource for carrying the HARQ-ACK information of the PDSCH.

Optionally, the DCI #1 needs to explicitly indicate a PC5 resource for carrying the HARQ-ACK information of the PDSCH. For example, the DCI #1 indicates a time gap #1 between the PC5 resource (for example, a PSSCH or PSFCH resource) and the PDSCH. In this case, the DCI #2 sent by the network device to the first terminal device also needs to carry information indicating the time gap #1.

For example, when configuring a time gap set #1 between the PDSCH and the PC5 resource for the second terminal device by using higher layer signaling, the network device also sends the higher layer signaling to the first terminal device. When the network device indicates, to the second terminal device by using indication information #1 in the DCI #1, a slot position of the PC5 resource for transmitting the PDSCH, the indication information #1 also needs to be indicated in the DCI #2. If the DCI #1 needs to explicitly indicate a PC5 resource (such as a PSFCH or PSSCH resource pool) for carrying the HARQ-ACK information of the PDSCH, time resource assignment (time resource assignment, TRA), or frequency resource assignment (frequency resource assignment, FRA), these parameters also need to be explicitly indicated in the DCI #2.

Optionally, a field (for example, a newly added field or a reused existing field in the first control information) indicating the first time gap in the first control information may be used together with higher layer signaling to indicate the first time gap. For example, before the network device sends the first control information to the first terminal device, the network device sends first configuration information to the first terminal device, where the first configuration information is used to configure a time gap set, and the first time gap is one time gap in the time gap set. The method procedure shown in FIG. 9 further includes the following step.

S911: The network device sends the first configuration information to the first terminal device. In other words, the first terminal device receives the first configuration information from the network device.

The first configuration information may be higher layer signaling (for example, an RRC message). For example, the higher layer signaling configures a plurality of time gap candidates for the first terminal device (for example, the network device configures four time gap candidates {3, 4, 5, 8} in total for the first terminal device, where a unit is slot).

Optionally, when the first control information reuses a PDSCH-to-HARQ feedback indicator field in a DCI format 1_0 or format 1_1, a bit width (bit width) of the PDSCH-to-HARQ feedback indicator field may be ceil($\log_2 4$)=2 bits, where

ceil($\cdot$) is ceiling (or may be replaced with $\left\lceil \log_2 4 \right\rceil$, where $\lceil\ \rceil$ indicates a ceiling operation), and 4 indicates a quantity of configured time gap candidates. The field may be an index, and the index corresponds to a value in the foregoing time gap candidate. For example, an index '00' represents a first value, which is '3', that is, the first time gap is three slots, indicating that the first HARQ-ACK information of the PDSCH #1 is fed back after three slots after the PDSCH #1 is received.

It should be noted that the foregoing enumerated implementation is merely an example for describing how to indicate the first time gap by using the first control information, and does not constitute any limitation on the protection scope of this application. The first time gap may be alternatively dynamically indicated in another manner, for example, the first time gap is indicated by adding signaling, or the first time gap is indicated in a preconfigured manner. An example is not described herein.

In addition, when the first time gap is measured in slots, a subcarrier spacing (subcarrier spacing, SCS) corresponding to a quantity of slots of the first time gap further needs to be determined. For example, an SCS corresponding to the second link is different from an SCS corresponding to the first link. As a result, duration of each slot on the second link is different from duration of each slot on the first link. For example, the SCS of the first link is 15 kHz, duration of each uplink or downlink slot is 1 ms, the SCS of the second link is 30 kHz, and duration of each slot on the second link is 0.5 ms. Therefore, when the first time gap is measured in slots, it needs to be specified whether the first time gap indicated by the first control information is a slot on the second link or a slot on the first link.

For example, the first terminal device determines, based on a first parameter, that an SCS referenced by the first time gap is the SCS corresponding to the first link or the SCS corresponding to the second link.

Optionally, the first parameter is configured by the network device. For example, the first parameter may be 1-bit information newly added to the DCI #1. For example, a 1-bit field may be added to the DCI #1 to indicate that the SCS that is indicated by the DCI #1 and that is referenced by the first time gap is the SCS corresponding to the first link or the SCS corresponding to the second link. For another example, the first parameter may be configured by using higher layer signaling. For example, an RRC message indicates the first parameter, and the first parameter is used to configure the SCS that is indicated by the DCI #1 and that is referenced by the first time gap as the SCS corresponding to the first link or the SCS corresponding to the second link.

Optionally, the first parameter is pre-burned in the first terminal device. It may be understood that the first parameter is preconfigured in the first terminal device before delivery.

For example, the first parameter may be preconfigured, and that the SCS that is indicated by the DCI #1 and that is referenced by the first time gap is the SCS corresponding to the first link or the SCS corresponding to the second link may be preconfigured, that is, preconfigured before delivery.

Optionally, the first parameter is determined by the first terminal device and the network device through negotiation.

It should be noted that, if the first time gap is not measured in slots, but is measured in absolute time (for example, in a unit of millisecond (ms)), an additional first parameter is not required to indicate that the SCS referenced by the first time gap is the SCS corresponding to the first link or the SCS corresponding to the second link.

Further, after determining the first time unit, the first terminal device further needs to determine a first PUCCH resource specifically used to transmit the first HARQ-ACK information. It may be understood that the first transmission resource includes the first time unit and the first PUCCH resource. With reference to manner 4.1 and manner 4.2, the following describes in detail how the first terminal device determines the first PUCCH resource.

Manner 4.1: The network device dynamically indicates the first PUCCH resource.

Referring to an existing air interface technology, a PUCCH resource is determined by using a field carried in DCI (for example, the first control information). For example, after preconfiguring, by using higher layer signaling (for example, an RRC message), at least one PUCCH resource for transmitting the HARQ-ACK information of the PDSCH, the network device uses DCI to indicate a PUCCH resource to be used. A size of a field that is in the DCI and that indicates the PUCCH resource may be fixed at 3 bits (an indication manner in the existing air interface technology is used), or may be determined based on a quantity of PUCCH resource candidates configured by the network device.

Manner 4.2: The network device semi-statically configures the first PUCCH resource.

The PUCCH resource may be semi-statically configured. To be specific, the network device preconfigures, by using higher layer signaling (for example, an RRC message), the PUCCH resource for transmitting the HARQ-ACK information of the PDSCH. When receiving the HARQ-ACK information of the PDSCH from the second terminal device, the first terminal device determines, based on a time gap value indicated by the first control information, a slot for transmitting a PUCCH, and performs transmission on the PUCCH resource configured by the network device.

Further, the first terminal device may determine, based on the first time gap and the first PUCCH resource, a PUCCH for actually sending the HARQ feedback information through the second link. The method procedure shown in FIG. 9 further includes the following step.

S920: The first terminal device determines the PUCCH.

For ease of understanding, with reference to FIG. 10, a manner in which the first terminal device determines a PUCCH time unit for transmitting the HARQ-ACK information is described. In FIG. 10, the first terminal device and the second terminal device detect DCIx in slots D1 and D2 by using a same frequency band, the DCIx detected in D1 and D2 schedules two PDSCHs, and two pieces of HARQ-ACK information corresponding to the two PDSCHs are transmitted on a third PSFCH on an SL. It should be noted that in this embodiment, how to determine the PSFCH (or a PSSCH) used to transmit the HARQ-ACK information on the SL is not limited.

Further, the DCIx further indicates a PUCCH time unit for transmitting the HARQ-ACK information of the PDSCH. For example, a field is added to the DCIx to indicate a first time gap (for example, a PSFCH-to-HARQ feedback indicator field) between the PSFCH (or a PSSCH) and the PUCCH, or a time gap between the PDSCH (or a PDCCH) and the PUCCH. For another example, a PDSCH-to-HARQ feedback indicator field in the downlink DCI format 1_0 or format 1_1 is reused to indicate a first time gap between a time domain position at which the PUCCH resource is received and a time domain position of an SL resource that carries the first HARQ-ACK information of the PDSCH #1. For example, the DCIx further indicates a PUCCH resource used to transmit the HARQ-ACK information of the PDSCH. For example, the DCIx includes a PUCCH resource indicator, and the PUCCH resource indicator indicates the PUCCH resource.

In the communication method shown in FIG. 9, the network device indicates, in a dynamic indication manner, the PUCCH resource used to transmit the HARQ feedback information. This application further provides another method for determining the PUCCH resource used to transmit the HARQ feedback information. The following provides detailed descriptions with reference to FIG. 11.

FIG. 11 is a schematic flowchart of another communication method according to this application. The method includes the following steps.

S1110: The first terminal device receives fifth information from the second terminal device. In other words, the second terminal device sends the fifth information to the first terminal device.

Specifically, that the first terminal device determines the first transmission resource for transmitting the first HARQ feedback information includes: determining specific time for transmitting the first HARQ-ACK information. In this embodiment, the fifth information includes first indication information, the first indication information indicates a first time gap, and the first time gap is a time gap between a first time unit in which the first terminal device sends the first HARQ-ACK information through the second link and a time unit in which the first terminal device receives the first HARQ-ACK information through the first link; or the first time gap is a time gap between a first time unit in which the first terminal device sends the first HARQ-ACK information through the second link and a time unit in which the first terminal device receives information (for example, DCI #1) for scheduling the PDSCH #1.

Specifically, the first indication information is information carried in the first HARQ-ACK information sent by the second terminal device through the first link. In other words, the first terminal device does not need to monitor DCI, that is, does not need to determine a transmission opportunity of the PDSCH by using DCI, and the network device sends DCI to the second terminal device. However, the first terminal device still needs to know how the HARQ-ACK information sent by the second terminal device to the first terminal device is uploaded to the network device through a PUCCH. Therefore, the first terminal device needs to know a PUCCH resource used to carry the HARQ, including a PUCCH resource indicator and a slot in which the PUCCH is located.

In an existing air interface technology, the PUCCH resource indicator is determined by using a field carried in DCI, and the slot of the PUCCH is indicated by using a k1 field. Details are not described herein again. In this embodiment, because the first terminal device does not receive the DCI, the PUCCH resource and the slot in which the PUCCH resource is located need to be determined in another manner.

In one manner, when sending the DCI #1 for scheduling the PDSCH to the second terminal device, the network device indicates a slot position of the PUCCH in the DCI #1, for example, indicates a time gap k between the PUCCH and the PDSCH or between the PUCCH and a PC5 resource in the DCI #1, and then transmits the time gap to the first terminal device by using the PC5 resource.

As shown in FIG. 12, the network device schedules a PDSCH in a slot D1 by using DCI. The DCI further indicates a resource (for example, after three slots, that is, the fifth S slot) of a PSSCH for transmitting HARQ-ACK information of the PDSCH, and the DCI further indicates an offset from the PSSCH to a PUCCH. For example, a new field PSSCH-to-HARQ timing feedback indicator is used. An indication manner of the field may be similar to that of the foregoing PDSCH-to-HARQ-feedback-on-PSSCH timing indicator, where the network device first configures several candidate values by using higher layer signaling, and then a manner in which the DCI indicates an index is used for determining.

Specifically, a size of the field also depends on a quantity of candidate values. For example, when a quantity of configured candidate values is 6, the size of the field in the DCI should be ceil($\log_2 6$)=3 bits. In this case, a MAC CE transmitted in the PSSCH includes an LCID, a HARQ-ACK information feedback result, and the time offset between the PSSCH and the PUCCH.

Further, when indicating the time offset between the PSSCH and the PUCCH, the DCI may further indicate a used PUCCH resource. For example, the network device configures a plurality of PUCCH candidates and corresponding indices by using higher layer signaling (for example, an RRC message), and then indicates, by using the DCI, a PUCCH resource that carries HARQ-ACK information of a corresponding PDSCH. For example, the DCI includes fourth information, and the fourth information indicates the PUCCH resource. After receiving the fourth information, the second terminal device learns of the PUCCH resource indicated by the fourth information, and may transmit the PUCCH resource indicated by the fourth information to the first terminal device by using a MAC CE, so that the first terminal device performs HARQ-ACK information feedback on a correct PUCCH resource. For example, the fifth information further includes second indication information, and the second indication information indicates the PUCCH resource.

FIG. 13 shows a method for transmission through a PSFCH. A PRB subset corresponding to each PDSCH not only includes HARQ-ACK information of the PDSCH, but also includes the k value. A quantity of PRBs occupied by the k value depends on a quantity of bits of a k field in the DCI #1, and the quantity of bits of the field depends on a quantity N of elements in a time gap set between the PDSCH and a PC5 resource, for example, ceil($\log_2 N$). For example, when the list includes six elements, three bits need to be occupied to indicate k, and therefore three PRBs are needed to indicate k. Therefore, when the PSFCH resource is configured, the bits needed by k need to be considered. For example, if the network device configures, by using higher layer signaling, eight PRBs of the PSFCH to transmit HARQ-ACK information of two PDSCH transmission opportunities, each PDSCH transmission opportunity corresponds to four PRBs, as shown in FIG. 13. When k is not transmitted, only one PRB in the four PRBs is used. For example, a PRB #0 and a PRB #4 are respectively used to transmit HARQs of a PDSCH #0 and a PDSCH #1, and no data is transmitted through the other PRBs, so that interference can be reduced.

The manner shown in FIG. 13 has a relatively high requirement on PRB resource overheads. To reduce PSFCH resource overheads, further extension of a code domain resource may be considered. FIG. 14 shows a method for determining a PRB of a PSFCH through a frequency domain and a code domain. A code domain size depends on a cyclic shift pair, and is 2 in FIG. 14. A HARQ bit, a k value, and a PUCCH resource indicator of a PDSCH are multiplexed in a manner of frequency domain first and then code domain. For example, a PRB 0#0 is used to transmit a HARQ, a PRB 1#0 to a PRB 3#0 are used to transmit k1, and a PRB 0#1 to a PRB 2#1 are used to transmit PUCCH resource indication information. It should be noted that the PRB 0#1 to the PRB 3#1 are not new PRBs, or the PRB 0#0 and the PRB 0#1 are understood as a same physical PRB, but content in the PRB is offset by using a cyclic position.

Information about k may alternatively be transmitted through a PSSCH. For example, when the HARQ of the PDSCH is transmitted by using a MAC CE, in addition to indicating a HARQ feedback, the MAC CE may also indicate information about k corresponding to the feedback. In this case, the MAC CE includes HARQ feedback information (1 or 2 bits) and the k value (3 bits), and may also include the PUCCH resource indicator (3 bits).

Further, the first terminal device needs to determine a PUCCH resource. The PUCCH resource may also be transmitted in the manner of transmitting the k value. For example, the PUCCH resource indicator usually occupies 3 bits. Therefore, three additional PRBs are required for indication. With reference to the scenario in FIG. 13, each PDSCH needs to be transmitted by using seven PRBs. Alternatively, the PUCCH resource may be semi-statically configured. To be specific, the network device preconfigures, by using higher layer signaling, the PUCCH resource for transmitting the HARQ of the PDSCH. When receiving the HARQ feedback information of the PDSCH from the second terminal device, the first terminal device determines, based on the k value, a slot for transmitting a PUCCH, and performs transmission on the PUCCH resource configured by the network device.

Specifically, when transmitting, through the second link, the HARQ feedback information of the PDSCH received from the second terminal device, the first terminal device needs to first determine a HARQ codebook. For example, the HARQ codebook usually has two types.

One type is a semi-static codebook, and a size of the HARQ codebook depends on a quantity of PDSCH transmission opportunities. That is, one HARQ feedback bit is reserved for each PDSCH transmission opportunity, regardless of whether a PDSCH really exists in the transmission opportunity.

Another type is a dynamic codebook, and a size of the codebook depends on a quantity of actually scheduled PDSCHs. The dynamic codebook reduces overheads of the HARQ codebook. However, to avoid a problem of codebook size unalignment caused by missing detection of DCI, the DCI carries a DAI field, to indicate an accumulative index of each PDSCH.

Therefore, when the first terminal device feeds back the HARQ-ACK information of the PDSCH on the second link, reference may also be made to a manner in which a HARQ codebook is constructed when a terminal device feeds back HARQ-ACK information to a network device in a current related technology. The HARQ codebook may also be semi-static or dynamic. This is not limited in this embodiment.

It can be learned from the foregoing that a manner of constructing the HARQ codebook is not limited in this embodiment, but a quantity of to-be-transmitted HARQ-ACK information needs to be learned in a process of constructing the HARQ codebook. In this embodiment, before sending the first HARQ-ACK information to the network device, the first terminal device needs to learn of a size of a HARQ codebook carrying the first HARQ-ACK information. In this embodiment, the first terminal device may learn, in the following manners, of the size of the HARQ codebook carrying the first HARQ-ACK information:

Manner 5.1: The network device sends first control information to the first terminal device, where the first control information indicates the size of the HARQ codebook. For example, the network device multicasts DCI #1, and the DCI #1 is used to schedule the PDSCH #1. Specifically, the network device simultaneously sends the DCI #1 to the first terminal device and the second terminal device in a form of multicast DCI, and the first terminal device and the second terminal device simultaneously monitor the same DCI #1. The second terminal device determines, based on the DCI #1, a slot position for receiving the PDSCH #1 and an SL resource (for example, a PSSCH or a PSFCH) for sending the HARQ feedback information of the PDSCH #1.

The first terminal device determines, based on the received DCI #1, that the network device sends the PDSCH #1 to the second terminal device, so as to determine the SL resource for receiving the HARQ-ACK information of the PDSCH #1.

In this implementation, the DCI #1 sent by the network device to the second terminal device may also be detected by the first terminal device, so that the first terminal device can determine the sent DCI #1 and a quantity of PDSCHs, to construct the HARQ codebook. A dynamic HARQ codebook is used as an example. When the first terminal device constructs the dynamic HARQ codebook, the DCI #1 usually includes a DAI indicating a PDSCH accumulative index. Therefore, the first terminal device may determine a size of the HARQ codebook based on the DAI in the DCI #1.

Manner 5.2: The network device sends first control information to the first terminal device, where the first control information indicates the size of the HARQ codebook, and the first control information is information separately sent by the network device to the first terminal device. For example, the network device sends, to the second terminal device, DCI #1 for scheduling the PDSCH #1, to determine a HARQ feedback information transmission resource of the PDSCH #1. The network device sends DCI #2 to the first terminal device, and the DCI #2 indicates a quantity of PDSCHs, to construct the HARQ codebook. The DCI #2 does not need to indicate some information related to the PDSCH, for example, information such as a modulation and coding scheme (modulation and coding scheme, MCS), thereby reducing a payload of the DCI #2.

Manner 5.3: The network device semi-statically configures information such as a time gap set between a PDSCH and a PC5 resource and a TDRA list for the first terminal device and the second terminal device by using higher layer signaling. Based on the information, the first terminal device may determine a PDSCH transmission opportunity set, and determine that one HARQ codebook includes a plurality of PDSCH reception candidates, that is, the size of the HARQ codebook.

Manner 5.4: The first terminal device determines, based on a PC5 resource corresponding to a PDSCH candidate, a HARQ feedback result corresponding to each PDSCH candidate. For example, a PSFCH is used as an example. In a case, when a PRB resource of the PSFCH is determined based on a quantity M of elements in a PDSCH transmission opportunity set, the PRB resource is divided into M PRB subsets of the PSFCH. Each PRB subset of the PSFCH carries HARQ information corresponding to the PDSCH, and a HARQ codebook may be generated based on a result of the PRB of the PSFCH. For another example, it is determined, based on a time gap set between the PDSCH and a PC5 resource, that there are five PDSCH transmission opportunities, and the size of the HARQ codebook is 5 bits, and it is learned, based on a PRB result of the PSFCH, that a PDSCH #0, a PDSCH #2, a PDSCH #3, and a PSDCH #4 have ACKs, and a PDSCH #2 has a NACK. In this case, a HARQ codeword '10111' (for example, 1 is an ACK, and 0 is a NACK) in the PUCCH may be generated.

In some cases, the PRB of the PSFCH may not carry information. For example, when missing detection occurs, a NACK may be fed back in a corresponding codeword. For example, if the PDSCH #4 is not detected, the second terminal device may not send any content in a corresponding PSFCH PRB subset. In this case, when the first terminal device detects no information in the PRB subset, the first terminal device may consider that there is a NACK, and generate a PUCCH HARQ codeword '10110'.

In the dynamic codebook, there may be a case in which the first terminal device misses detecting DCIx, the second terminal device misses detecting DCIx, or the first terminal device misses detecting transmission of HARQ feedback information on an SL resource. The following describes in detail how to process the foregoing cases.

(1) When the first terminal device misses detecting the DCIx, the first terminal device may perform feedback for a corresponding PDSCH based on feedback of a PSFCH. For example, the network device schedules three PDSCHs in slots D0, D1, and D2. The first terminal device determines, based on a DAI, that one piece of DCI between D0 and D2 is missing in detection, and therefore generates a 3-bit HARQ codebook. The second terminal device side does not miss detecting any PDSCH. In this case, in the PSFCH feedback, although one PDSCH is missing in detection, the first terminal device receives feedbacks of the three PDSCHs, and therefore, may perform HARQ feedback based on a result of the PSFCH. Alternatively, for a PDSCH that is missing in detection, the first terminal device may ignore a HARQ feedback of the second terminal device for the PDSCH, and directly feed back a NACK, and feedback for a detected PDSCH is performed based on an actual receiving result of the PSFCH. If the second terminal device also encounters missing detection, according to descriptions in the conventional technology, the second terminal device may feed back a NACK on a PC5 resource for transmitting a corresponding PDSCH HARQ, or may not perform any transmission. When the first terminal device does not detect PSFCH data, the first terminal device may directly feed back a NACK at a corresponding bit position in a PUCCH HARQ codebook.

(2) When the first terminal device does not miss detecting the DCIx, and the second terminal device encounters missing detection, according to descriptions in the conventional technology, the second terminal device may feed back a NACK on a PC5 resource for transmitting a corresponding PDSCH HARQ, or may not perform any transmission. When the first terminal device does not detect PSFCH data, the first terminal device may directly feed back a NACK at a corresponding bit position in a PUCCH HARQ codebook.

(3) The first terminal device does not miss detecting DCI, but misses detecting a PSFCH of a PDSCH. In this case, the first terminal device transmits a NACK at a corresponding bit position in a HARQ codebook corresponding to the PDSCH.

The foregoing describes a case in which the HARQ feedback is transmitted through the PSFCH. The size of the HARQ codebook and content of the HARQ codeword are determined in a manner in which the DCIx indicates a DAI and a time gap between the PDSCH and the PSFCH. This manner may also be extended to a case in which a PDSCH HARQ is transmitted through a PSSCH. To be specific, the first terminal device may determine the size of HARQ codebook based on the DAI, determine, based on the PUCCH resource indicator in the DCI, a PUCCH format to be used for transmission, determine, based on the indicated time gap, a PSSCH slot position for transmitting the PDSCH HARQ, and determine a HARQ feedback bit for each PDSCH in the slot. In this case, the foregoing missing detection problem may also occur. When the first terminal device misses detecting the DCI, the first terminal device may perform adjustment based on feedback content of a PSSCH. For example, if the first terminal device misses detecting the second piece of DCI in DCI 1, 2, and 3 and the PDSCH, but receives, from the PSSCH, a HARQ feedback for a PDSCH scheduled by using the DCI 2, the first terminal device may perform feedback at a corresponding bit in the HARQ codebook based on the HARQ result.

In addition, in this embodiment of this application, a prerequisite that the first terminal device can correctly receive the first information from the second terminal device is that the first terminal device learns of a PC5 resource (for example, a PSFCH or a PSSCH) that carries the first information. In this application, how to configure the PC5 resource used to carry the first information is not described in detail, and a manner of learning of the PC5 resource by the first terminal device is briefly described. Details are as follows:

The first terminal device determines a second quantity M of downlink data in a first downlink data set, where the first downlink data is one of the M pieces of downlink data, M pieces of HARQ-ACK information corresponding to the M pieces of downlink data are all transmitted on the PSFCH, and M is a positive integer.

The first terminal device determines a second resource block quantity based on the second quantity and a first resource block quantity, where the first resource block quantity is a quantity of resource blocks included in the PSFCH, and the second resource block quantity is a quantity of resource blocks occupied by the first HARQ-ACK information.

The first terminal device determines a position of the second resource block quantity in the first resource block quantity based on a position of the first downlink data in the downlink data set.

Manner 6.1: A PSFCH PRB used to transmit HARQ-ACK information of a PDSCH is separately configured. That is, the first transmission resource is dedicated to transmitting HARQ-ACK information of downlink data.

Optionally, in the case shown in manner 6.1, M, the first resource block quantity, and the second resource block quantity satisfy the following relationship:

$$N = \left\lfloor \frac{K}{M} \right\rfloor$$

where N represents the second resource block quantity, K represents the first resource block quantity, $\lfloor \; \rfloor$ represents a floor operation, and N resource blocks corresponding to an $m^{th}$ piece of downlink data in the M pieces of downlink data are resource blocks whose indices are (m-1)*N to m*N-1 in K resource blocks;
or
M, the first resource block quantity, and the second resource block quantity satisfy the following relationship:

$$N = \frac{K}{M}$$

where M is divisible by K, and N resource blocks corresponding to an $m^{th}$ piece of downlink data in the M pieces of downlink data are resource blocks whose indices are (m-1)*N to m*N-1 in K resource blocks;
or
if M1>0, when m is any integer from 1 to M1, N resource blocks corresponding to an $m^{th}$ piece of downlink data in the M pieces of downlink data are resource blocks whose indices are (m-1)*K1 to m*K1-1 in K resource blocks, or when m is any integer from M1 to M, N resource blocks corresponding to an $m^{th}$ piece of downlink data in the M pieces of downlink data are an [M1*K1+(m-M1-1)*K2]$^{th}$ resource block to an [M1*K1+(m-M1-1)*K2+K2-1]$^{th}$ resource block in K resource blocks; or
if M1=0, N resource blocks corresponding to an $m^{th}$ piece of downlink data in the M pieces of downlink data are an [M1*K1+(m-M1-1)*K2]$^{th}$ resource block to an [M1*K1+(m-M1-1)*K2+K2-1]$^{th}$ resource block in K resource blocks, where

K1 is $\left\lceil \dfrac{K}{M} \right\rceil$, K2 is $\left\lfloor \dfrac{K}{M} \right\rfloor$, M1 is a remainder of $\dfrac{K}{M}$, and $\lceil \; \rceil$ represents a ceiling operation.

Manner 6.2: A shared PSFCH is used to transmit HARQ-ACK information of a PDSCH and transmit HARQ-ACK information of a PSSCH. That is, the PSFCH is used to transmit HARQ-ACK information of downlink data and HARQ-ACK information of sidelink data.

Optionally, in the case shown in manner 6.2, M, the first resource block quantity, the second resource block quantity, and a third quantity satisfy the following relationship:

$$N = \left\lfloor \frac{K}{M+A} \right\rfloor$$

where N represents the second resource block quantity, K represents the first resource block quantity, A represents the third quantity, the third quantity is a quantity of HARQ-ACK information that is of the sidelink data and that is transmitted on the PSFCH, $\lfloor \; \rfloor$ represents a floor operation, and N resource blocks corresponding to an $m^{th}$ piece of downlink data in the M pieces of downlink data and A pieces of sidelink data are resource blocks whose indices are (m-1)*N to m*N-1 in K resource blocks;

or

M, the first resource block quantity, the second resource block quantity, and a third quantity satisfy the following relationship:

$$N = \frac{K}{M + A}$$

where M+A is divisible by K, and N resource blocks corresponding to an mth piece of downlink data in the M pieces of downlink data and A pieces of sidelink data are resource blocks whose indices are (m-1)*N to m*N-1 in K resource blocks;

or

if M1>0, when m is any integer from 1 to M1, N resource blocks corresponding to an mth piece of downlink data in the M pieces of downlink data and A pieces of sidelink data are resource blocks whose indices are (m-1)*K1 to m*K1-1 in K resource blocks, or when m is any integer from M1 to M, N resource blocks corresponding to an mth piece of downlink data in the M pieces of downlink data are an [M1 *K1+(m-M1-1)*K2][th] resource block to an [M1*K1+(m-M1-1)*K2+K2-1][th] resource block in K resource blocks; or

if M1=0, N resource blocks corresponding to an mth piece of downlink data in the M pieces of downlink data and A pieces of sidelink data are an [M1*K1+(m-M1-1)*K2][th] resource block to an [M1*K1+(m-M1-1)*K2+K2-1][th] resource block in K resource blocks, where

K1 is $\left\lceil \dfrac{K}{M+A} \right\rceil$, K2 is $\left\lfloor \dfrac{K}{M+A} \right\rfloor$, M1 is a remainder of $\dfrac{K}{M+A}$, and $\lceil \ \rceil$ represents a ceiling operation.

In an embodiment, before the network device sends the first downlink data, the network device configures a HARQ feedback mode for the first terminal device and the second terminal. For example, in a semi-static configuration manner, the network device semi-statically configures the first terminal device and the second terminal device to the mode by sending configuration information to the first terminal device and the second terminal device. In other words, in such a configuration, any HARQ feedback sent by the second terminal device to the network device is not sent through a direct uplink path between the second terminal device and the network device, but is forwarded by the first terminal device. In addition, the first terminal device receives HARQ feedback information from the second terminal device, and transfers the HARQ feedback information to the network device. For example, after sending the configuration information, the network device schedules downlink data by using DCI, and indicates related scheduling and feedback information of the downlink data. In this case, the second terminal device decodes the data based on the DCI, and transmits corresponding HARQ feedback information to the first terminal device. The second terminal device determines, based on the DCI, scheduling information corresponding to the downlink data, such as a time domain position, a HARQ feedback offset (if indicated in the DCI), and a PUCCH resource (if indicated in the DCI), determines a HARQ from the second terminal device, including a resource position of the HARQ, and determines a Uu transmission resource for transmitting the HARQ between the first terminal device and the network device, to perform transmission.

Alternatively, in another implementation, the network device dynamically indicates, by using DCI, whether a HARQ of a PDSCH scheduled by using the DCI is forwarded to the network device through another device. For example, the network device adds a simple indication field including 1 bit to the DCI. For example, when the 1-bit indication field is '1', the HARQ of the PDSCH indicated by the DCI is forwarded through the first terminal device. When the indication field is '0', the HARQ of the PDSCH indicated by the DCI is sent through a direct path between the second terminal device and the network device, and is not sent through the first terminal device.

It should be understood that sequence numbers of the foregoing processes do not mean a sequence of execution. The sequence of execution of the processes should be determined according to functions and internal logic of the processes, and should not constitute any limitation on an implementation process of embodiments of this application.

It should be further understood that in embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

It should be further understood that in some of the foregoing embodiments, a device in an existing network architecture is mainly used as an example for description (for example, a network device or a terminal device). It should be understood that a specific form of the device is not limited in embodiments of this application. For example, all devices that can implement a same function in the future are applicable to embodiments of this application.

It may be understood that, in the foregoing method embodiments, methods and operations implemented by a device (for example, the network device or the terminal device) may also be implemented by a component (for example, a chip or a circuit) of the device.

The communication method provided in embodiments of this application is described in detail above with reference to FIG. 8 to FIG. 14. The foregoing communication method is mainly described from a perspective of interaction between the terminal device and the network device. It may be understood that, to implement the foregoing functions, the terminal device and the network device include corresponding hardware structures and/or software modules for performing the functions.

A person skilled in the art should be aware that, with reference to the example units and algorithm steps described in the embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

The communication apparatus provided in this application is described below in detail with reference to FIG. 15 and FIG. 17. It should be understood that descriptions of apparatus embodiments correspond to descriptions of the method embodiments. Therefore, for content that is not described in detail, refer to the foregoing method embodiments. For brevity, some content is not described again.

In embodiments of this application, a transmit end device or a receive end device may be divided into functional modules according to the foregoing method examples. For example, each functional module may be obtained through division based on each corresponding function, or two or more functions may be integrated into one processing module. The integrated module may be implemented in a form of hardware, or may be implemented in a form of a software functional module. It should be noted that division into the modules in embodiments of this application is an example, and is merely logical function division. During actual implementation, there may be another division manner. An example in which each functional module is obtained through division based on each corresponding function is used below for description.

FIG. 15 is a block diagram of a communication apparatus 10 according to an embodiment of this application. The apparatus 10 includes a transceiver module 11 and a processing module 12. The transceiver module 11 may implement a corresponding communication function. The processing module 12 is configured to perform data processing. In other words, the transceiver module 11 is configured to perform receiving and sending related operations. The processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, so that the apparatus implements an action of a device in the foregoing method embodiments.

In a design, the apparatus 10 may correspond to the first terminal device in the foregoing method embodiments, or may be a component (for example, a chip) of the first terminal device.

The apparatus 10 may implement corresponding steps or procedures performed by the first terminal device in the foregoing method embodiments. The transceiver module 11 may be configured to perform receiving and sending related operations of the first terminal device in the foregoing method embodiments. The processing module 12 may be configured to perform a processing related operation of the first terminal device in the foregoing method embodiments.

In a possible implementation, the transceiver module 11 is configured to receive first information from a second terminal device through a first link, where the first information includes first hybrid automatic repeat request acknowledgement HARQ-ACK information, the first HARQ-ACK information is HARQ-ACK information corresponding to first downlink data, and the first downlink data is downlink data sent by a network device to the second terminal device; and the transceiver module 11 is further configured to send second information to the network device through a second link, where the second information includes the first HARQ-ACK information. The first link is a transmission link between the first terminal device and the second terminal device, and the second link is a link between the first terminal device and the network device.

When the apparatus 10 is configured to perform the method in FIG. 8, the transceiver module 11 may be configured to perform steps of receiving and sending information in the method, for example, steps S810 and S820; and the processing module 12 may be configured to perform a processing step in the method.

When the apparatus 10 is configured to perform the method in FIG. 9, the transceiver module 11 may be configured to perform steps of receiving and sending information in the method, for example, step S910; and the processing module 12 may be configured to perform a processing step in the method, for example, step S920.

When the apparatus 10 is configured to perform the method in FIG. 11, the transceiver module 11 may be configured to perform steps of receiving and sending information in the method, for example, step S1110; and the processing module 12 may be configured to perform a processing step in the method, for example, step S1120.

It should be understood that a specific process in which the units perform the foregoing corresponding steps is described in detail in the foregoing method embodiments. For brevity, details are not described herein.

In another design, the apparatus 10 may correspond to the network device in the foregoing method embodiments, or may be a component (for example, a chip) of the network device.

The apparatus 10 may implement corresponding steps or procedures performed by the network device in the foregoing method embodiments. The transceiver module 11 may be configured to perform receiving and sending related operations of the network device in the foregoing method embodiments. The processing module 12 may be configured to perform a processing related operation of the network device in the foregoing method embodiments.

In a possible implementation, the transceiver module 11 sends first downlink data to a second terminal device through a third link; the processing module 12 is configured to configure a first transmission resource for the first terminal device through a second link, where the first transmission resource is used to transmit second information, the second information includes first hybrid automatic repeat request acknowledgement HARQ-ACK information, and the first HARQ-ACK information is HARQ-ACK information corresponding to the first downlink data; and the transceiver module 11 is configured to receive the second information from the first terminal device through the second link. The first link is a transmission link between the first terminal device and the second terminal device, the second link is a link between the first terminal device and the network device, and the third link is a transmission link between the second terminal device and the network device.

When the apparatus 10 is configured to perform the method in FIG. 8, the transceiver module 11 may be configured to perform steps of receiving and sending information in the method, for example, step S820; and the processing module 12 may be configured to perform a processing step in the method.

When the apparatus 10 is configured to perform the method in FIG. 9, the transceiver module 11 may be configured to perform steps of receiving and sending information in the method, for example, step S910; and the processing module 12 may be configured to perform a processing step in the method.

It should be understood that a specific process in which the units perform the foregoing corresponding steps is described in detail in the foregoing method embodiments. For brevity, details are not described herein.

In another design, the apparatus 10 may correspond to the second terminal device in the foregoing method embodiments, or may be a component (for example, a chip) of the second terminal device.

The apparatus 10 may implement corresponding steps or procedures performed by the second terminal device in the foregoing method embodiments. The transceiver module 11 may be configured to perform receiving and sending related operations of the second terminal device in the foregoing method embodiments. The processing module 12 may be configured to perform a processing related operation of the second terminal device in the foregoing method embodiments.

In a possible implementation, the transceiver module 11 is configured to receive first downlink data from a network device through a third link; and the transceiver module 11 is further configured to send first information and fifth information to a first terminal device through a first link, where the fifth information indicates a first transmission resource, the first information includes first hybrid automatic repeat request acknowledgement HARQ-ACK information, the first HARQ-ACK information is HARQ-ACK information corresponding to the first downlink data, the first transmission resource is used by the first terminal device to send second information to the network device through a second link, and the second information includes the first HARQ-ACK information. The first link is a transmission link between the first terminal device and the second terminal device, the second link is a link between the first terminal device and the network device, and the third link is a transmission link between the second terminal device and the network device.

When the apparatus 10 is configured to perform the method in FIG. 8, the transceiver module 11 may be configured to perform steps of receiving and sending information in the method, for example, step S810; and the processing module 12 may be configured to perform a processing step in the method.

When the apparatus 10 is configured to perform the method in FIG. 11, the transceiver module 11 may be configured to perform steps of receiving and sending information in the method, for example, step S1110; and the processing module 12 may be configured to perform a processing step in the method.

It should be understood that a specific process in which the units perform the foregoing corresponding steps is described in detail in the foregoing method embodiments. For brevity, details are not described herein.

It should be understood that the apparatus 10 herein is embodied in a form of a functional module. The term "module" herein may refer to an application-specific integrated circuit (application-specific integrated circuit, ASIC), an electronic circuit, a memory and a processor (such as a shared processor, a dedicated processor, or a group of processors) configured to execute one or more software or firmware programs, a combined logic circuit, and/or another suitable component that supports the described function. In an optional example, a person skilled in the art may understand that the apparatus 10 may be specifically a mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in the foregoing solutions has a function of implementing corresponding steps performed by the device (for example, the terminal device or the network device) in the foregoing methods. The function may be implemented by using hardware, or may be implemented by using hardware executing corresponding software. The hardware or software includes one or more modules corresponding to the foregoing function. For example, a transceiver module may be replaced with a transceiver (for example, a sending unit in the transceiver module may be replaced with a transmitter, and a receiving unit in the transceiver module may be replaced with a receiver), and another unit such as a processing module may be replaced with a processor, to respectively perform sending and receiving operations and a related processing operation in the method embodiments.

In addition, the transceiver module 11 may alternatively be a transceiver circuit (for example, the transceiver circuit may include a receiver circuit and a transmitter circuit), and the processing module may be a processing circuit.

FIG. 16 is a diagram of another communication apparatus 20 according to an embodiment of this application. The apparatus 20 includes a processor 21. The processor 21 is configured to execute a computer program or instructions stored in a memory 22, or read data/signaling stored in a memory 22, to perform the methods in the foregoing method embodiments. Optionally, there are one or more processors 21.

Optionally, as shown in FIG. 16, the apparatus 20 further includes the memory 22. The memory 22 is configured to store the computer program or instructions and/or data. The memory 22 and the processor 21 may be integrated together, or may be disposed separately. Optionally, there are one or more memories 22.

Optionally, as shown in FIG. 16, the apparatus 20 further includes a transceiver 23. The transceiver 23 is configured to receive a signal and/or send a signal. For example, the processor 21 is configured to control the transceiver 23 to receive a signal and/or send a signal.

In a solution, the apparatus 20 is configured to implement operations performed by the terminal device in the foregoing method embodiments.

It should be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should be further noted that the memory described in this specification aims to include but is not limited to these memories and any memory of another proper type.

FIG. 17 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the terminal device in the foregoing method embodiments.

For example, the logic circuit 31 is configured to implement processing related operations performed by the terminal device in the foregoing method embodiments, and the input/output interface 32 is configured to implement sending and/or receiving related operations performed by the terminal device in the foregoing method embodiments.

An embodiment of this application further provides a computer-readable storage medium. The computer-readable storage medium stores computer instructions used to implement the method performed by the device in the foregoing method embodiments.

For example, when the computer program is executed by a computer, the computer is enabled to implement the method performed by the terminal device or the network device in the foregoing method embodiments.

An embodiment of this application further provides a computer program product, including instructions. When the instructions are executed by a computer, the method performed by the terminal device or the network device in the foregoing method embodiments is implemented.

An embodiment of this application further provides a communication system, including the foregoing terminal device and network device.

For explanations and beneficial effects of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiments are merely examples. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium includes but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   receiving, by a first terminal device, first information from a second terminal device through a first link, wherein the first information comprises first hybrid automatic repeat request acknowledgement HARQ-ACK information, the first HARQ-ACK information is HARQ-ACK information corresponding to first downlink data, and the first downlink data is downlink data sent by a network device to the second terminal device; and
   sending, by the first terminal device, second information to the network device through a second link, wherein the second information comprises the first HARQ-ACK information, wherein
   the first link is a transmission link between the first terminal device and the second terminal device, and the second link is a link between the first terminal device and the network device.

2. The method according to claim 1, wherein before sending, by the first terminal device, the second information to the network device through the second link, the method further comprises:
   determining, by the first terminal device, a first time unit in which the first terminal device sends the second information.

3. The method according to claim 2, wherein determining, by the first terminal device, the first time unit in which the first terminal device sends the second information comprises:

> determining, by the first terminal device, a first time gap, wherein the first time gap is less than or equal to a time gap between the first time unit and a second time unit; and
> determining, by the first terminal device, the first time unit based on the first time gap and the second time unit, wherein
> the second time unit is a time unit in which the first terminal device receives the first information through the first link, or a time unit in which the first terminal device receives first control information through the second link, or a time unit in which the second terminal device receives the first downlink data.

4. The method according to claim 3, wherein determining, by the first terminal device, the first time gap comprises:

> receiving, by the first terminal device, the first control information from the network device, wherein the first control information indicates the first time gap; or
> receiving, by the first terminal device, first indication information from the second terminal device, wherein the first indication information indicates the first time gap.

5. The method according to claim 4, wherein before receiving, by the first terminal device, the first control information from the network device, the method further comprises:
receiving, by the first terminal device, first configuration information from the network device, wherein the first configuration information is used to configure a time gap set, and the first time gap is one time gap in the time gap set.

6. The method according to any one of claims 3 to 5, wherein when the first time gap is measured in slots, determining, by the first terminal device, the first time gap further comprises:
determining, by the first terminal device, that a subcarrier spacing SCS referenced by the first time gap is a first SCS or a second SCS, wherein the first SCS is an SCS corresponding to the first link, the second SCS is an SCS corresponding to the second link, and the first link is different from the second link.

7. The method according to claim 6, wherein determining, by the first terminal device, that the SCS referenced by the first time gap is the first SCS or the second SCS comprises:

> determining, by the first terminal device based on a first parameter, that the SCS referenced by the first time gap is the first SCS or the second SCS, wherein the first parameter indicates the first SCS or the second SCS, wherein the first parameter is configured by the network device, the first parameter is determined by the first terminal device and the network device through negotiation, or the first parameter is pre-burned into the first terminal device.

8. The method according to any one of claims 1 to 7, wherein the method further comprises:
determining, by the first terminal device, a first physical uplink control channel PUCCH resource, wherein the first PUCCH resource is used to transmit the second information.

9. The method according to claim 8, wherein determining, by the first terminal device, the first PUCCH resource comprises:

> receiving, by the first terminal device, the first control information from the network device, and determining the first PUCCH resource based on third information comprised in the first control information;
> or
> receiving, by the first terminal device, second indication information from the second terminal device, and determining the first PUCCH resource based on the second indication information.

10. The method according to claim 9, wherein the first control information is further sent to the second terminal device to schedule the first downlink data.

11. The method according to any one of claims 2 to 10, wherein the method further comprises:
determining, by the first terminal device, a size of a HARQ codebook carrying the first HARQ-ACK information.

12. The method according to claim 11, wherein determining, by the first terminal device, the size of the HARQ codebook carrying the first HARQ-ACK information comprises:

receiving, by the first terminal device, fourth information from the network device, wherein the fourth information indicates the size of the HARQ codebook; or

determining, by the first terminal device, the size of the HARQ codebook based on a first quantity, wherein the first quantity is a maximum quantity of HARQ-ACK information that is of downlink data and that is transmissible through the second link in the first time unit.

13. The method according to any one of claims 1 to 12, wherein when the first terminal device receives the first information from the second terminal device through a physical sidelink feedback channel PSFCH on the first link, the method further comprises:

determining, by the first terminal device, a second quantity M of downlink data in a first downlink data set, wherein the first downlink data is one of the M pieces of downlink data, M pieces of HARQ-ACK information corresponding to the M pieces of downlink data are all transmitted on the PSFCH, and M is a positive integer;

determining, by the first terminal device, a second resource block quantity based on the second quantity and a first resource block quantity, wherein the first resource block quantity is a quantity of resource blocks comprised in the PSFCH, and the second resource block quantity is a quantity of resource blocks occupied by the first HARQ-ACK information; and

determining, by the first terminal device, a position of the second resource block quantity in the first resource block quantity based on a position of the first downlink data in the downlink data set.

14. The method according to claim 13, wherein the PSFCH is used to transmit HARQ-ACK information of downlink data.

15. The method according to claim 14, wherein M, the first resource block quantity, and the second resource block quantity satisfy the following relationship:

$$N = \left\lfloor \frac{K}{M} \right\rfloor$$

wherein N represents the second resource block quantity, K represents the first resource block quantity, $\lfloor \rfloor$ represents a floor operation, and N resource blocks corresponding to an $m^{th}$ piece of downlink data in the M pieces of downlink data are resource blocks whose indices are (m-1)*N to m*N-1 in K resource blocks;

or

M, the first resource block quantity, and the second resource block quantity satisfy the following relationship:

$$N = \frac{K}{M}$$

wherein M is divisible by K, and N resource blocks corresponding to an $m^{th}$ piece of downlink data in the M pieces of downlink data are resource blocks whose indices are (m-1)*N to m*N-1 in K resource blocks;

or

if M1>0, when m is any integer from 1 to M1, N resource blocks corresponding to an $m^{th}$ piece of downlink data in the M pieces of downlink data are resource blocks whose indices are (m-1)*K1 to m*K1-1 in K resource blocks, or when m is any integer from M1 to M, N resource blocks corresponding to an $m^{th}$ piece of downlink data in the M pieces of downlink data are an $[M1*K1+(m-M1-1)*K2]^{th}$ resource block to an $[M1*K1+(m-M1-1)*K2+K2-1]^{th}$ resource block in K resource blocks; or

if M1=0, N resource blocks corresponding to an $m^{th}$ piece of downlink data in the M pieces of downlink data are an $[M1*K1+(m-M1-1)*K2]^{th}$ resource block to an $[M1*K1+(m-M1-1)*K2+K2-1]^{th}$ resource block in K resource blocks, wherein

K1 is $\left\lceil \frac{K}{M} \right\rceil$, K2 is $\left\lfloor \frac{K}{M} \right\rfloor$, M1 is a remainder of $\frac{K}{M}$, and $\lceil \rceil$ represents a ceiling operation.

16. The method according to claim 13, wherein the PSFCH is used to transmit HARQ-ACK information of downlink data and HARQ-ACK information of sidelink data.

17. The method according to claim 16, wherein M, the first resource block quantity, the second resource block quantity, and a third quantity satisfy the following relationship:

$$N = \left\lfloor \frac{K}{M+A} \right\rfloor$$

wherein N represents the second resource block quantity, K represents the first resource block quantity, A represents the third quantity, the third quantity is a quantity of HARQ-ACK information that is of the sidelink data and that is transmitted on the PSFCH, $\lfloor \rfloor$ represents a floor operation, and N resource blocks corresponding to an $m^{th}$ piece of downlink data in the M pieces of downlink data and A pieces of sidelink data are resource blocks whose indices are (m-1)*N to m*N-1 in K resource blocks;
or
M, the first resource block quantity, the second resource block quantity, and a third quantity satisfy the following relationship:

$$N = \frac{K}{M+A}$$

wherein M+A is divisible by K, and N resource blocks corresponding to an $m^{th}$ piece of downlink data in the M pieces of downlink data and A pieces of sidelink data are resource blocks whose indices are (m-1)*N to m*N-1 in K resource blocks;
or
if M1>0, when m is any integer from 1 to M1, N resource blocks corresponding to an $m^{th}$ piece of downlink data in the M pieces of downlink data and A pieces of sidelink data are resource blocks whose indices are (m-1)*K1 to m*K1-1 in K resource blocks, or when m is any integer from M1 to M, N resource blocks corresponding to an $m^{th}$ piece of downlink data in the M pieces of downlink data are an [M1*K1+(m-M1-1)*K2]$^{th}$ resource block to an [M1*K1+(m-M1-1)*K2+K2-1]$^{th}$ resource block in K resource blocks; or
if M1=0, N resource blocks corresponding to an $m^{th}$ piece of downlink data in the M pieces of downlink data and A pieces of sidelink data are an [M1*K1+(m-M1-1)*K2]$^{th}$ resource block to an [M1*K1+(m-M1-1)*K2+K2-1]$^{th}$ resource block in K resource blocks, wherein

K1 is $\left\lceil \dfrac{K}{M+A} \right\rceil$, K2 is $\left\lfloor \dfrac{K}{M+A} \right\rfloor$, M1 is a remainder of $\dfrac{K}{M+A}$, and $\lceil \rceil$ represents a ceiling operation.

18. The method according to any one of claims 1 to 17, wherein the first downlink data comprises a physical downlink shared channel PDSCH, the first link is a link for communication based on a first communication interface, the second link is a link for communication based on a second communication interface, the first communication interface is a PC5 interface, the second communication interface is a first Uu interface, the first terminal device comprises a mobile terminal, and the second terminal device comprises an extended reality XR device.

19. A communication method, comprising:

sending, by a network device, first downlink data to a second terminal device through a third link;
configuring, by the network device, a first transmission resource for a first terminal device through a second link, wherein the first transmission resource is used to transmit second information, the second information comprises first hybrid automatic repeat request acknowledgement HARQ-ACK information, and the first HARQ-ACK information is HARQ-ACK information corresponding to the first downlink data; and
receiving, by the network device, the second information from the first terminal device through the second link, wherein
the second link is a link between the first terminal device and the network device, and the third link is a transmission link between the second terminal device and the network device.

20. The method according to claim 19, wherein the first transmission resource comprises a first time domain resource and a first physical uplink control channel PUCCH resource, the first time domain resource is in a first time unit, and the method further comprises:

> sending, by the network device, first control information to the first terminal device, wherein the first control information indicates a first time gap, wherein
> the first time gap is less than or equal to a time gap between the first time unit and a second time unit, and the second time unit is a time unit in which the first terminal device receives first information through a first link, or a time unit in which the first terminal device receives the first control information through the second link, or a time unit in which the second terminal device receives the first downlink data.

21. The method according to claim 20, wherein before sending, by the network device, the first control information to the first terminal device, the method further comprises:
sending, by the network device, first configuration information to the first terminal device, wherein the first configuration information is used to configure a time gap set, and the first time gap is one time gap in the time gap set.

22. The method according to claim 20 or 21, wherein when the first time gap is measured in slots, the method further comprises:
sending, by the network device, a first parameter to the first terminal device, wherein the first parameter indicates that a subcarrier spacing SCS referenced by the first time gap is a first SCS or a second SCS, the first SCS is an SCS corresponding to the first link, the second SCS is an SCS corresponding to the second link, and the first link is different from the second link.

23. The method according to any one of claims 20 to 22, wherein the method further comprises:
sending, by the network device, the first control information to the first terminal device, wherein the first control information comprises third information, and the third information indicates the first PUCCH resource.

24. The method according to claim 23, wherein sending, by the network device, the first control information to the first terminal device comprises:
sending, by the network device, the first control information to the first terminal device and the second terminal device, wherein the first control information is further used to schedule the first downlink data.

25. The method according to any one of claims 19 to 24, wherein the method further comprises:

> determining, by the network device based on a first quantity, a size of a HARQ codebook carrying the first HARQ-ACK information; and
> sending, by the network device, fourth information to the first terminal device, wherein the fourth information indicates the size of the HARQ codebook, wherein
> the first quantity is a maximum quantity of HARQ-ACK information that is of downlink data and that is transmissible through the second link in the first time unit.

26. A communication method, comprising:

> receiving, by a second terminal device, first downlink data from a network device through a third link; and
> sending, by the second terminal device, first information and fifth information to a first terminal device through a first link, wherein the fifth information indicates a first transmission resource, the first information comprises first hybrid automatic repeat request acknowledgement HARQ-ACK information, and the first HARQ-ACK information is HARQ-ACK information corresponding to the first downlink data, wherein
> the first transmission resource is used by the first terminal device to send second information to the network device through a second link, the second information comprises the first HARQ-ACK information, the first link is a transmission link between the first terminal device and the second terminal device, the second link is a link between the first terminal device and the network device, and the third link is a transmission link between the second terminal device and the network device.

27. The method according to claim 26, wherein the first transmission resource comprises a first time domain resource and a first physical uplink control channel PUCCH resource, the first time domain resource is in a first time unit, the fifth information comprises first indication information, and the first indication information indicates a first time gap; and
the first time gap is less than or equal to a time gap between the first time unit and a second time unit, and the second time unit is a time unit in which the first terminal device receives the first information through the first link, or a time unit in which the first terminal device receives first control information through the second link, or a time unit in which the second terminal device receives the first downlink data.

28. The method according to claim 27, wherein the fifth information comprises second indication information, and the second indication information indicates the first PUCCH resource.

29. The method according to any one of claims 26 to 28, wherein the first information and the fifth information are comprised in a media access control control element MAC CE.

30. A terminal device, wherein the terminal device comprises a processor and a memory, the processor is coupled to the memory, the memory is configured to store a computer program, and when the processor runs the computer program, the terminal device is enabled to perform the method according to any one of claims 1 to 18, or the terminal device is enabled to perform the method according to any one of claims 26 to 29.

31. A network device, wherein the network device comprises a processor and a memory, the processor is coupled to the memory, the memory is configured to store a computer program, and when the processor runs the computer program, the network device is enabled to perform the method according to any one of claims 19 to 25.

32. A computer-readable storage medium, wherein the computer-readable storage medium stores computer instructions, and when the computer instructions are run on a terminal device, the terminal device is enabled to perform the method according to any one of claims 1 to 18; or when the computer instructions are run on a network device, the network device is enabled to perform the method according to any one of claims 19 to 25; or when the computer instructions are run on a terminal device, the terminal device is enabled to perform the method according to any one of claims 26 to 29.

33. A computer program product, comprising instructions, wherein when the computer instructions are run on a terminal device, the terminal device is enabled to perform the method according to any one of claims 1 to 18; or when the computer instructions are run on a network device, the network device is enabled to perform the method according to any one of claims 19 to 25; or when the computer instructions are run on a terminal device, the terminal device is enabled to perform the method according to any one of claims 26 to 29.

34. A chip, wherein the chip comprises a processor and a communication interface, the processor reads instructions through the communication interface and runs the instructions, and when the chip is installed in a terminal device, the terminal device is enabled to perform the method according to any one of claims 1 to 18; or when the chip is installed in a network device, the network device is enabled to perform the method according to any one of claims 19 to 25; or when the chip is installed in a terminal device, the terminal device is enabled to perform the method according to any one of claims 26 to 29.

35. A communication system, wherein the communication system comprises a first terminal device, a second terminal device, and a network device, the first terminal device is configured to perform the method according to any one of claims 1 to 18, the network device is configured to perform the method according to any one of claims 19 to 25, and the second terminal device is configured to perform the method according to any one of claims 26 to 29.

FIG. 1

FIG. 2

| D0 | D1 | D2 | D3 | U0 | D4 | D5 | D6 | D7 | U1 |
|----|----|----|----|----|----|----|----|----|----|

FIG. 3

| S0 | S1 | S2 | S3 | PSFCH | S4 | S5 | S6 | S7 | PSFCH |

Minimum slot offset=2

FIG. 4

PSSCH transmission resource

FIG. 5

FIG. 6

Uu #2 | D0 | D1 | D2 | D3 | U | D | D | D | D | U

PC5 | S | S PSFCH S | S PSFCH S | S PSFCH S | S PSFCH S | S PSFCH

(a)

Uu #2 | D0 | D1 | D2 | D3 | U | D | D | D | D | U

PC5 | S | S PSFCH S | S PSFCH S | S PSFCH S | S PSFCH S | S PSFCH

(b)

PC5 | S | S PSFCH S | S PSFCH S | S PSFCH S | S PSFCH S | S PSFCH

(c)

PRB 9
PRB 8
PRB 7
PRB 6
PRB 5
PRB 4
PRB 3
PRB 2
PRB 1
PRB 0

Frequency domain

| PRB $9_0$ | PRB $9_1$ | | PRB $9_{N_{CS}^{PSFCH}}$ |
| ... | ... | ... | ... |
| PRB $4_0$ | PRB $4_1$ | ... | PRB $4_{N_{CS}^{PSFCH}}$ |
| PRB $3_0$ | PRB $3_1$ | ... | PRB $3_{N_{CS}^{PSFCH}}$ |
| PRB $2_0$ | PRB $2_1$ | ... | PRB $2_{N_{CS}^{PSFCH}}$ |
| PRB $1_0$ | PRB $1_1$ | ... | PRB $1_{N_{CS}^{PSFCH}}$ |
| PRB $0_0$ | PRB $0_1$ | ... | PRB $0_{N_{CS}^{PSFCH}}$ |

Code domain

FIG. 7

| First terminal device | Second terminal device | Network device |
|---|---|---|

First downlink data

S810: First information

S820: Second information

FIG. 8

| First terminal device | Network device |
|---|---|

S911: First configuration information

S910: First control information

S920: Determine a PUCCH

FIG. 9

FIG. 10

EP 4 648 510 A1

First terminal device

Second terminal device

S1110: Fifth information

S1120: Determine a
PUCCH

FIG. 11

43

EP 4 648 510 A1

DCI

| | | | | | | | | | |
|---|---|---|---|---|---|---|---|---|---|
| Uu #2 | D0 | D1 | D2 | D3 | U | D | D | D | D | U |

| | | | | | |
|---|---|---|---|---|---|
| PC5 | S PSFCH S | S PSFCH S | S PSFCH S | S PSFCH S | S PSFCH S |

HARQ feedback indicator

| | | | | | | | | | |
|---|---|---|---|---|---|---|---|---|---|
| Uu #1 | D0 | D1 | D2 | D3 | U | D | D | D | D | U |

FIG. 12

FIG. 13

EP 4 648 510 A1

| Uu #2 | D0 | D1 | D2 | D3 | U | D | D | D | D | U |

k1

| PC5 | S PSFCH S | S PSFCH S | S PSFCH S | S PSFCH S | S PSFCH S |

PDSCH 1

PRB 7
PRB 6
PRB 5
PRB 4

PDSCH 0

PRB 3
PRB 2
PRB 1
PRB 0

Frequency domain

| PRB $3_0$  k | PRB $3_1$ | |
| PRB $2_0$  k | PRB $2_1$ | RI |
| PRB $1_0$  k | PRB $1_1$ | RI |
| PRB $0_0$     HARQ | PRB $0_1$ | RI |

Code domain

FIG. 14

10

Transceiver module 11

Processing module 12

Storage module 13

FIG. 15

20

Processor 21

Transceiver 23

Memory 22

FIG. 16

Chip system 30

Logic circuit 31

Input/Output interface 32

FIG. 17

## INTERNATIONAL SEARCH REPORT

| International application No. |
|---|
| **PCT/CN2023/134949** |

| A. | CLASSIFICATION OF SUBJECT MATTER |
|---|---|
| | H04W 72/0446(2023.01)i |

According to International Patent Classification (IPC) or to both national classification and IPC

| B. | FIELDS SEARCHED |
|---|---|

Minimum documentation searched (classification system followed by classification symbols)

　　IPC:H04W,H04Q

Documentation searched other than minimum documentation to the extent that such documents are included in the fields searched

Electronic data base consulted during the international search (name of data base and, where practicable, search terms used)

　　3GPP, CNTXT, CNKI, DWPI, ENTXTC, VEN: 边链路, 侧链路, 第二UE, 第二终端, 发送, 转发, 反馈, 上行, 下行, 中继, 资源, ACK, D2D, D2X, feedback, HARQ, PC5, PDSCH, PSFCH, PSSCH, PUCCH, resource, sidelink, UE2, UL

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2021127396 A1 (SAMSUNG ELECTRONICS CO., LTD.) 29 April 2021 (2021-04-29) description, paragraphs 115-117, 363-370 and 537-546, and figure 21 | 1-12, 18-19, 30-35 |
| Y | US 2021127396 A1 (SAMSUNG ELECTRONICS CO., LTD.) 29 April 2021 (2021-04-29) description, paragraphs 115-117, 363-370 and 537-546, and figure 21 | 26, 29 |
| Y | US 2021266133 A1 (SAMSUNG ELECTRONICS CO., LTD.) 26 August 2021 (2021-08-26) description, paragraphs 127-131, and figure 8 | 26, 29 |
| A | WO 2021031017 A1 (HUAWEI TECHNOLOGIES CO., LTD.) 25 February 2021 (2021-02-25) entire document | 1-35 |
| A | US 2022077967 A1 (QUALCOMM INCORPORATED) 10 March 2022 (2022-03-10) entire document | 1-35 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 January 2024** | **07 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/134949**

| Patent document cited in search report | | | Publication date (day/month/year) | Patent family member(s) | | | Publication date (day/month/year) |
|---|---|---|---|---|---|---|---|
| US | 2021127396 | A1 | 29 April 2021 | EP | 3735797 | A1 | 11 November 2020 |
| | | | | KR | 20200108446 | A | 18 September 2020 |
| | | | | WO | 2019156505 | A1 | 15 August 2019 |
| | | | | CN | 110139247 | A | 16 August 2019 |
| | | | | CN | 110290592 | A | 27 September 2019 |
| | | | | IN | 202047033656 | A | 18 September 2020 |
| US | 2021266133 | A1 | 26 August 2021 | WO | 2020004894 | A1 | 02 January 2020 |
| | | | | US | 2023299932 | A1 | 21 September 2023 |
| | | | | EP | 3815449 | A1 | 05 May 2021 |
| | | | | CN | 110661602 | A | 07 January 2020 |
| WO | 2021031017 | A1 | 25 February 2021 | EP | 4016883 | A1 | 22 June 2022 |
| | | | | US | 2022174648 | A1 | 02 June 2022 |
| | | | | JP | 2022544606 | A | 19 October 2022 |
| | | | | KR | 20220044529 | A | 08 April 2022 |
| | | | | CN | 114144981 | A | 04 March 2022 |
| | | | | IN | 202227005531 | A | 22 July 2022 |
| US | 2022077967 | A1 | 10 March 2022 | WO | 2022051126 | A1 | 10 March 2022 |
| | | | | EP | 4208971 | A1 | 12 July 2023 |
| | | | | IN | 202247072963 | A | 30 December 2022 |
| | | | | CN | 115989648 | A | 18 April 2023 |

Form PCT/ISA/210 (patent family annex) (July 2022)

**REFERENCES CITED IN THE DESCRIPTION**

**Patent documents cited in the description**

- CN 202310204435

- CN 202310277101